(19) **Europäisches Patentamt / European Patent Office / Office européen des brevets**

(11) **EP 4 415 274 A1**

(12) # EUROPEAN PATENT APPLICATION

(43) Date of publication:
**14.08.2024 Bulletin 2024/33**

(21) Application number: **23156233.1**

(22) Date of filing: **13.02.2023**

(51) International Patent Classification (IPC):
**H04B 7/0408** (2017.01)   **H04L 5/00** (2006.01)
**H04W 72/044** (2023.01)   **H04W 72/23** (2023.01)

(52) Cooperative Patent Classification (CPC):
**H04B 7/06952; H04L 69/22;** H04B 7/024;
H04B 7/0408; H04L 5/0023; H04L 5/0053;
H04W 72/046; H04W 72/231

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Panasonic Intellectual Property
Corporation
of America
Torrance, CA 90504 (US)**

(72) Inventors:
• **ZEINEDDINE, Khalid
63225 Langen (DE)**
• **SUZUKI, Hidetoshi
Osaka, 571-8501 (JP)**

(74) Representative: **Grünecker Patent- und
Rechtsanwälte
PartG mbB
Leopoldstraße 4
80802 München (DE)**

(54)     **SYSTEM AND METHODS FOR TCI STATE ACTIVATION FOR MULTIPLE TRP TRANSMISSION**

(57)     The disclosure relates to a user equipment, a base station device, and respective methods for a user equipment and a base station. More specifically, the user equipment comprises a transceiver and circuitry which, in operation: receives a Medium Access Control, MAC, Control Element, CE, message including an indication specifying one or more transmission configuration indication, TCI, states, wherein each of the one or more TCI states is associated with a group of TCI states out of a plurality of groups of TCI states; and obtains a set of TCI states out of a plurality of TCI states, based on the one or more TCI states indicated in the MAC-CE message.

**Fig. 24**

## Description

## BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

## SUMMARY

One non-limiting and exemplary embodiment facilitates efficient handling of the configuration of TCI states for configuring transmission occasions.

In an embodiment, the techniques disclosed here feature an apparatus (e.g. a user equipment, UE). The apparatus comprises a transceiver and circuitry. The circuitry, in operation: receives a Medium Access Control, MAC, Control Element, CE, message including an indication specifying one or more transmission configuration indication, TCI, states, wherein each of the one or more TCI states is associated with a group of TCI states out of a plurality of groups of TCI states; and obtains a set of TCI states out of a plurality of TCI states, based on the one or more TCI states indicated in the MAC-CE message.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

## BRIEF DESCRIPTION OF THE FIGURES

In the following exemplary embodiments are described in more detail with reference to the attached figures and drawings.

Fig. 1    shows an exemplary architecture for a 3GPP NR system;

Fig. 2    is a schematic drawing that shows a functional split between NG-RAN and 5GC;

Fig. 3    is a sequence diagram for RRC connection setup/reconfiguration procedures;

Fig. 4    is a schematic drawing showing usage scenarios of Enhanced mobile broadband (eMBB), Massive Machine Type Communications (mMTC) and Ultra Reliable and Low Latency Communications (URLLC);

Fig. 5    is a block diagram showing an exemplary 5G system architecture for a non-roaming;

Fig. 6    is a block diagram illustrating an exemplary functional structure of a base station and a user equipment;

Fig. 7    is a block diagram illustrating an exemplary functional structure of the circuitry handling of TCI state configuration that may be included in the exemplary user equipment of Fig. 6;

Fig. 8    is a block diagram illustrating an exemplary functional structure of the TCI state configuration circuitry that may be included in the exemplary base station equipment of Fig. 6;

**Fig. 9**     is a flow chart illustrating exemplary steps performed by a user equipment;

**Fig. 10**     is a flow chart illustrating exemplary steps performed by a network node;

**Fig. 11**     is a schematic drawing illustrating an updating of TCI states;

**Fig. 12**     exemplarily illustrates a MAC-CE message including TCI codepoints according to a first exemplary embodiment;

**Fig. 13**     shows an exemplary association of configurations of groups of TCI states and indications for TCI states according to a first exemplary embodiment for M=4;

**Fig. 14**     shows an exemplary association of configurations of groups of TCI states and indications for TCI states according to a first exemplary embodiment for M=5;

**Fig. 15**     shows an exemplary association of configurations of groups of TCI states and indications for TCI states according to a first exemplary embodiment for M=3;

**Fig. 16**     exemplarily illustrates a MAC-CE message including TCI codepoints according to a second exemplary embodiment;

**Fig. 17**     shows an exemplary association of configurations of groups of TCI states and indications for TCI states according to a second exemplary embodiment for M=3;

**Fig. 18**     shows an exemplary association of configurations of groups of TCI states and indications for TCI states according to a second exemplary embodiment for M=2;

**Fig. 19**     exemplarily illustrates a MAC-CE message including TCI codepoints according to a third exemplary embodiment;

**Fig. 20**     shows an exemplary list of TCI codepoints of a first and a second MAC-CE message and an interim table including configurations of TCI codepoints;

**Fig. 21**     exemplarily illustrates an interim MAC-CE message including TCI codepoints according to a first example of the third exemplary embodiment;

**Fig. 22**     exemplarily illustrates a DCI field indicating TCI codepoints according to a second example of the third exemplary embodiment;

**Fig. 23**     exemplarily illustrates an indexing field for indicating TCI codepoints according to a third example of the third exemplary embodiment;

**Fig. 24**     is a second exemplary flow chart illustrating exemplary steps performed by a user equipment;

**Fig. 25**     is a second exemplary flow chart illustrating exemplary steps performed by a network node.

## DETAILED DESCRIPTION

*5G NR system architecture and protocol stacks*

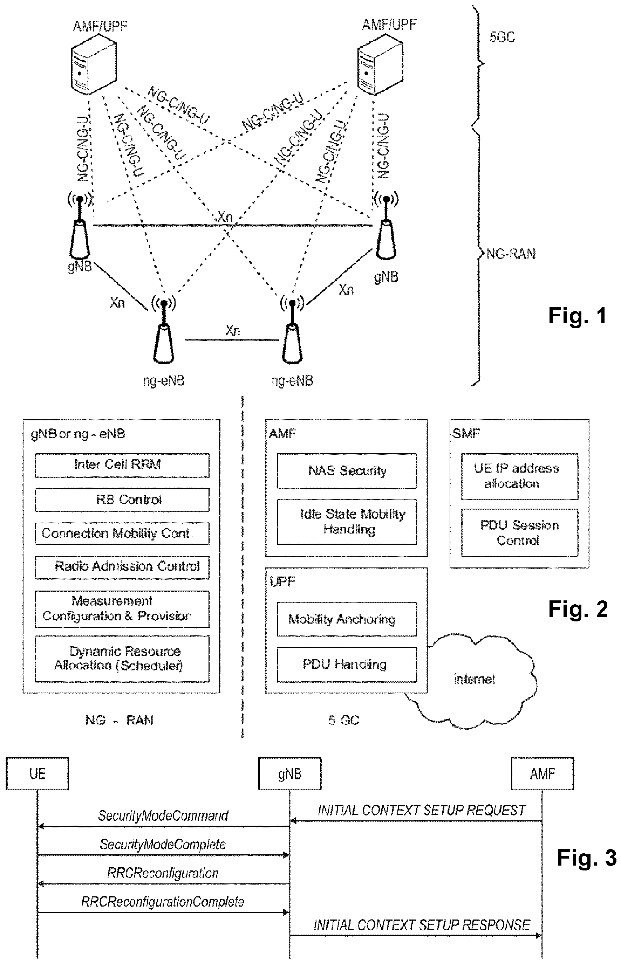

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.
Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter $\mu$ (in LTE there is only a 15 kHz subcarrier spacing, corresponding to $\mu$ = 0 in NR). The types NR numerology is summarized in 3GPP TS 38.211, v 15.7.0.

*5G NR functional split between NG-RAN and 5GC*

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;

- Control part of policy enforcement and QoS;
- Downlink Data Notification.

*RRC connection setup and reconfiguration procedures*

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation *configuration.*

*Usage Scenarios of IMT for 2020 and beyond*

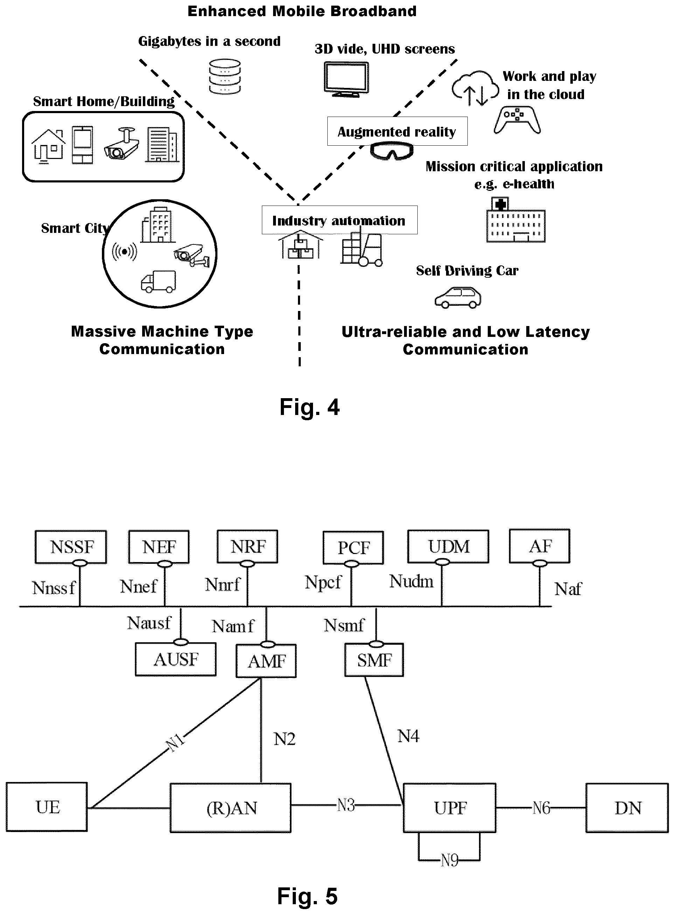

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to $10^{-6}$ level), higher availability, packet sizes of up to 256 bytes, time synchronization down to the order of a few $\mu$s where the value can be one or a few $\mu$s depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

*Control Signals*

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

*Terminal*

A *terminal* or *user terminal* or *user device* or *mobile station* or *mobile node* is referred to in the LTE and NR as a *user equipment (UE).* This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as IoT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

*Base Station*

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a *scheduling node* or *network node,* e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *base station* or *radio base station* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

*Uplink/Downlink/Sidelink*

The present disclosure may be applied to any of uplink, downlink and sidelink.
The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).
PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

*Data Channels/Control Channels*

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

*Reference Signals*

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

*Time Intervals*

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

*Frequency Bands*

The present disclosure may be applied to any of a licensed band and an unlicensed band.

*Communication*

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.
In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

*Antenna Ports*

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

*Downlink control channel monitoring, PDCCH, DCI*

Many of the functions operated by the UE involve the monitoring of a downlink control channel (e.g. the PDCCH, see 3GPP TS 38.300 v15.6.0, section 5.2.3) to receive e.g. particular control information or data destined to the UE.
A non-exhaustive list of these functions is given in the following:

- • a paging message monitoring function,
- • a system information acquisition function,
- • signalling monitoring operation for a Discontinued Reception, DRX, function,
- • inactivity monitoring operation for a Discontinued Reception, DRX, function,
- • random access response reception for a random access function,
- • reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).
Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

*Physical Resource Block*

In general, the term *"physical resource block"* (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

*Multiple transmission and reception points*

The physical layer in NR may provide multi-antenna operation such as MIMO (multiple input, multiple output) which may, for instance, include the use of plural or multiple transmission and reception points (multi-TRP). For instance, a user equipment may receive data from plural TRPs (transmission and reception points), wherein the plural-TRPs may be controlled by the same or different network nodes. The terms multi-point transmission or coordinated multi-point transmission (CoMP) may also be used for multi-TRP communication including multi-TRP transmission.

In 3rd generation partnership project (3GPP) in new radio (NR) Rel. 15, basic support for multiple transmission and reception point (multi-TRP) was specified. In NR Rel. 16 multi-TRP may further be enhanced in accordance with a new work item on NR MIMO (cf. RP-182067, 'Revised WID (work item description): Enhancements on MIMO for NR', Samsung, 3GPP TSG RAN (Technical Specification Group Radio Access Network) Meeting #81, Gold Coast, Australia, Sept 10 - 13, 2018).

For instance, multi-TRP operation may be performed by a gNB having different antenna panels or radio heads corresponding to the TRPs and different radio frequency units operating with the respective antennas.

Moreover, in multi-TRP, several options are conceivable with respect to the positional relationship between TRPs, and the distance between two TRPs may vary. For instance, the TRPs may be close, so that a UE receives signals from these TRPs from a similar angle. However, TRPs may also be located at a rather far distance from each other, for instance at remote locations of a network cell. A UE being served by the two TRPs may receive and transmit the signaling from and to the respective TRPs on uncorrelated channels. Accordingly, gains in channel diversity may be optimally utilized.

*Quasi Co-location (QCL)*

According to the definition of QCL in TS38.214 Sec 5.1.5, the UE can be configured with a list of up to *M TCI-State* configurations within the higher layer parameter *PDSCH-Config* to decode PDSCH according to a detected PDCCH with DCI intended for the UE and the given serving cell, where M depends on the UE capability *maxNumberConfiguredTCIstatesPerCC.* Each *TCI-State* contains parameters for configuring a quasi co-location relationship between one or two downlink reference signals and the DM-RS ports of the PDSCH, the DM-RS port of PDCCH or the CSI-RS port(s) of a CSI-RS resource. The quasi co-location relationship is configured by the higher layer parameter *qcl-Type1* for the first DL RS, and *qcl-Type2* for the second DL RS (if configured). For the case of two DL RSs, the QCL types shall not be the same, regardless of whether the references are to the same DL RS or different DL RSs. The quasi co-location types corresponding to each DL RS are given by the higher layer parameter *qcl-Type* in *QCL-Info* and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

*Transmission Configuration Indication (TCI) states*

Using a DL channel, the gNB indicates to the UE a list of new (indicated) TCI states. Such indication may be represented by a bit sequence, e.g. a TCI codepoint. A TCI state in such a codepoint may indicated a UL, DL or joint UL/DL (beam correspondence) spatial (transmission) direction.

A list (a subset) of TCI states to activate/deactivate is configured by a bitmap. If a bit in a specific location is set to be '1', it means that it activates the TCI state mapped to the position of the bit. If the bit is set to be '0', it means that it deactivates the TCI state mapped to the position of the bit.

The list of bit position that are set to be '1' is assigned to a small table called codepoint and the max size of the codepoint is 8. It mean that only up to 8 bit fields in this MAC CE can be set to be '1'. The position of '1' bits may be assigned to codepoint in increasing order.

For example, the following fields are set to be '1' and all other bits are set to be '0'.

T4 = 1
T10 = 1
T11 = 1
T19 = 1
T25 = 1
T40 = 1
T45 = 1
T50 = 1

Then the codepoint is set to be as follows.

codepoint 0 = 4
codepoint 1 = 10
codepoint 2 = 11
codepoint 3 = 19
codepoint 4 = 25
codepoint 5 = 40
codepoint 6 = 45
codepoint 7 = 50

The TCI in DCI 1_1 indicates this codepoint index.

RRC signaling (from a base station to a UE) is used to configure up to 128 TCI states for the PDSCH and up to 64 TCI states for the PDCCH. All TCI states are deactivated by default after configuration and after a handover.

In DCI format 1-1 (section 7.3.1.2.2 of 3GPP TS 38.212 V15.2.0), which is used for PDSCH scheduling, includes a field called transmission configuration indication (TCI) that is used to indicate one of the eight TCI states using 3 bits, if configured. A UE may be configured with a list of up to M TCI states out of the available TCI states (i.e. the above mentioned 128 or 64 configured TCIs) configured by parameter PDSCH-Config which is configured in the RRC (Radio Resource Control) signaling which is an example of a higher layer signaling in NR. By higher here a layer higher than the physical layer is meant. In the example of the above mentioned DCI format 1-1, M = 8 in correspondence with the maximum number of 3 bits in the TCI field. Each TCI state contains parameters for configuring a quasi co-location relationship between one or two downlink reference signals and the DM-RS ports of the PDSCH. For example, the TCI state has the following format:

```
TCI-State ::= SEQUENCE {
    tci-StateId            TCI-StateId,
    qcl-Type1              QCL-Info,
    qcl-Type2              QCL-Info
    ...
}

QCL-Info ::=            SEQUENCE {
    cell                      ServCellIndex
    bwp-Id                    BWP-Id
    referenceSignal        CHOICE {
        csi-rs                NZP-CSI-RS-ResourceId,
        ssb                   SSB-Index
    },
    qcl-Type               ENUMERATED {typeA, typeB, typeC, typeD},
    ...
}
```

For example, for a TCI state, two reference signals may be indicated (e.g. RS A and RS B), and these reference signals may be used to derive some channel propagation parameters.

Then a TCI state may be associated with a channel or signal by using thetci-StateId. Such signal/channel is QCLed with RS A and RS B, meaning the same channel propagation parameters may be used for this RS/channel as the ones derived for RS A and RS B.

For downlink, the reference signals in the TCI state may be a CSI-RS or an SSB as the structure above shows.

Further information about the different QCL types and other relevant information can be found in section 5.1.5 of 3GPP TS 38.214 V15.16.0. Accordingly, a single PDCCH (single DCI) has up to 3 bits for TCI signaling to indicate one of the eight configured states that signals the QCL assumption for a TRP and assumes same QCL assumption for other TRPs scheduled by the given PDCCH. With this QCL assumption, the TCI state information that is signaled via DCI is applicable in particular to single TRP transmission, because the same QCL association might not be valid for one different TRPs that are located far apart from each other. Some modifications may facilitate supporting independent TCI state signaling for multiple TRPs using a single PDCCH. For instance, TRPs that are geographically located apart should have a different QCL assumption, hence an independent TCI state signaling for each TRP.

In particular, 3GPP TS 38.214, section 5.1.5 defines, that the UE receives an activation command, as described in clause 6.1.3.14 of [10, TS 38.321], used to map up to 8 TCI states to the codepoints of the DCI field *'Transmission Configuration Indication'.* When the UE would transmit a PUCCH with HARQ-ACK information in slot n corresponding to the PDSCH carrying the activation command, the indicated mapping between TCI states and codepoints of the DCI field *'Transmission Configuration Indication'* should be applied starting from the first slot that is after slot

$$n + 3N_{slot}^{subframe,\mu}$$

where $\mu$ is the SCS configuration for the PUCCH. If *tci-PresentInDCI* is set to "enabled" for the CORESET scheduling the PDSCH, and the time offset between the reception of the DL DCI and the corresponding PDSCH is equal to or greater than *timeDurationForQCL* if applicable, after a UE receives an initial higher layer configuration of TCI states and before reception of the activation command, the UE may assume that the DM-RS ports of PDSCH of a serving cell are quasi co-located with the SS/PBCH block determined in the initial access procedure with respect to 'QCL-TypeA', and when applicable, also with respect to'QCL-TypeD'.

If a UE is configured with the higher layer parameter *tci-PresentInDCI* that is set as 'enabled' for the CORESET scheduling the PDSCH, the UE assumes that the TCI field is present in the DCI format 1_1 of the PDCCH transmitted on the CORESET. If *tci-PresentInDCI* is not configured for the CORESET scheduling the PDSCH or the PDSCH is scheduled by a DCI format 1_0, and the time offset between the reception of the DL DCI and the corresponding PDSCH is equal to or greater than a threshold *timeDurationForQCL* if applicable, where the threshold is based on reported UE capability [13, TS 38.306], for determining PDSCH antenna port quasi co-location, the UE assumes that the TCI state or the QCL assumption for the PDSCH is identical to the TCI state or QCL assumption whichever is applied for the CORESET used for the PDCCH transmission.

If the *tci-PresentInDCI* is set as 'enabled', the TCI field in DCI in the scheduling component carrier points to the activated TCI states in the scheduled component carrier or DL BWP and when the PDSCH is scheduled by DCI format 1_1, the UE shall use the *TCI-State* according to the value of the *'Transmission Configuration Indication'* field in the detected PDCCH with DCI for determining PDSCH antenna port quasi co-location. The UE may assume that the DM-RS ports of PDSCH of a serving cell are quasi co-located with the RS(s) in the TCI state with respect to the QCL type parameter(s) given by the indicated TCI state if the time offset between the reception of the DL DCI and the corresponding PDSCH is equal to or greater than a threshold *timeDurationForQCL,* where the threshold is based on reported UE capability [13, TS 38.306]. When the UE is configured with a single slot PDSCH, the indicated TCI state should be based on the activated TCI states in the slot with the scheduled PDSCH. When the UE is configured with a multi-slot PDSCH, the indicated TCI state should be based on the activated TCI states in the first slot with the scheduled PDSCH, and UE shall expect the activated TCI states are the same across the slots with the scheduled PDSCH. When the UE is configured with CORESET associated with a search space set for cross-carrier scheduling, the UE expects *tci-PresentInDci* is set as 'enabled' for the CORESET, and if one or more of the TCI states configured for the serving cell scheduled by the search space set contains 'QCL-TypeD', the UE expects the time offset between the reception of the detected PDCCH in the search space set and the corresponding PDSCH is larger than or equal to the threshold *timeDurationForQCL.*

For both the cases when *tci-PresentInDCI* is set to 'enabled' and *tci-PresentInDCI* is not configured in RRC connected mode, if the offset between the reception of the DL DCI and the corresponding PDSCH is less than the threshold *timeDurationForQCL,* the UE may assume that the DM-RS ports of PDSCH of a serving cell are quasi co-located with the RS(s) with respect to the QCL parameter(s) used for PDCCH quasi co-location indication of the CORESET associated with a monitored search space with the lowest *controlResourceSetId* in the latest slot in which one or more CORESETs within the active BWP of the serving cell are monitored by the UE. In this case, if the 'QCL-TypeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers). If none of configured TCI states for the serving cell of scheduled PDSCH contains 'QCL-TypeD', the UE shall obtain the other QCL assumptions from the indicated TCI state for its scheduled PDSCH irrespective of the time offset between the reception of the DL DCI and the corresponding PDSCH.

In NR release 15, the TCI-state (transmission configuration indication) for DL, and spatial relation for UL are signaled in DCI per channel/RS. Such signaling may create a signaling overhead, mainly because in many cases, the gNB configures the best beam for all UL/DL channels/RSs. Release 16 beam indication aimed at reducing signaling overhead and latency, by using the TCI state of the PDCCH as a "common beam" to be used as the default beam applied to PDSCH/PUCCH/SRS/PUSCH.

In release 17 NR, for single TRP transmission, a new beam indication scheme, known as the unified TCI (transmission configuration indication) framework, was introduced.

For single TRP transmission, the UE is provided with one joint TCI state (a spatial domain filter that may be used for uplink and downlink) or a pair of separate DL and UL TCI states through a three-step procedure:

1. First the UE is RRC configured (by the base station) with one list of joint or DL TCI states (joint/DL pool) and one list of UL TCI states (UL pool). These TCI states are referred to as the configured TCI states. The first list of joint or DL states can contain 128 TCI states, and the second list can contain 64 UL TCI states as mentioned above.

2. In step 2, a MAC CE (control element) from the base station activates a group of TCI states from the two pools. They are activated in the form of a list of 8 TCI codepoints, as explained above. A codepoint contains one or more configured TCI states. An example of a list of TCI codepoints activated by MAC-CE for a single TRP transmission when RRC *unifiedtci-StateType = joint* is:

| Codepoint # | |
|---|---|
| 0 | (joint/DL TCI 2) |
| 1 | (joint/DL TCI 5) |
| 2 | ((joint/DL TCI 8) |
| 3 | (joint/DL TCI 21) |
| 4 | (joint/DL TCI 33) |
| 5 | (joint/DL TCI 4) |
| 6 | (joint/DL TCI 1) |
| 7 | (joint/DL TCI 9) |

An example of a list of TCI codepoints activated by MAC-CE for single TRP transmission when RRC *unifiedtci-StateType* = *separate* (i.e. separate TCI states are configured for DL and UL, respectively) is:

| Codepoint # | |
|:---:|:---:|
| 0 | (joint/DL TCI 1; UL TCI 3) |
| 1 | (joint/DL TCI 20; UL TCI 7) |
| 2 | (joint/DL TCI 3; UL TCI 17) |
| 3 | (joint/DL TCI 9; UL TCI 5) |
| 4 | (joint/DL TCI 1; UL TCI 8) |
| 5 | (joint/DL TCI 6; UL TCI 13) |
| 6 | (joint/DL TCI 11; UL TCI 5) |
| 7 | (joint/DL TCI 23; UL TCI 9) |

3. In step 3, a DCI with either format 1_1 or 1_2 (with or without DL data assignment) uses the 3-bit TCI field to choose one of the activated TCI codepoints and therefore indicate which TCI states to use for downlink and uplink transmission. Those TCI states are referred to as the 'indicated' TCI states.

The DCI with format 1_1 and 1_2 used to indicate the TCI states can be either with or without a DL data assignment. Therefore, a scheduling DCI and a beam indication DCI can be distinguished.

For the scheduling DCI, the ACK/NAK of the PDSCH scheduled by the DCI carrying the beam indication can be used as an ACK also for the DCI. For beam indication DCI, an ACK/NACK is also reported. An ACK is reported in a PUCCH after a certain number of slots after the end of the PDCCH reception. In Rel.17 unified TCI framework, indicated TCI is applied after *BeamAppTime_r17*= {1, 2, 4, 7, 14, 28, 42, 56, 70, 84, 98, 112, 224, 336} symbols from ACK transmission of the beam indication DCI.

The spatial filters indicated by the DCI would apply to all DL and UL signals and channels (unless they are RRC configured not to apply the indicated TCI state); it is applied to:

- all or a subset of PDCCH(s) in a cell,
- the PDSCHs scheduled by the PDCCH(s),
- dynamic- or configured-grant PUSCH
- UE-dedicated PUCCH resources.
- Aperiodic CSI-RS or SRS (limited to certain usage)

The unified TCI framework in Release 17 only supports single-TRP operation. Moreover, it is not allowed to configure both Rel.15/16 beam indication and Rel.17 TCI state in the same band. Therefore, Release 18 aims to extending Rel-17 unified TCI framework to the multi-TRP scenario and avoiding having the UE simultaneously manage both legacy and unified TCI beam indication schemes.

*Multi TRP transmission schemes*

In Release 16 and 17 there exist several Multi TRP transmission schemes. For example, in a Single-DCI based multiTRP PDSCH repetition scheme, a single DCI which is transmitted from one of the TRPs is used to schedule two PDSCH transmissions from two TRPs respectively. The scheduling DCI indicates two TCI states, each corresponding to one TRP. Such a scheme may be a Space Division Multiplexed (SDMed), Frequency Division Multiplexed (FDMed) or Time Division Multiplexed (TDMed) scheme.

For an exemplary SDMed, the first TRP may transmit a subset of layers of the transport block while the second TRP may transmit the remaining layers, on the same time and frequency resources. Antenna ports from different CDM groups are used to transmit the layers from each TRP, where the first TCI state corresponds to the first CDM group, and the second TCI state corresponds to the second CDM group. Dynamic switching between PDSCH SDM multiTRP scheme and single TRP PDSCH transmission is indicated by using two TCI states in the DCI and using antenna ports from two different CDM groups.

In exemplary FDM and TDM repetition schemes, two TRPs may repeat the same PDSCH transmission either in frequency or time domain. For the time domain, intraslot as well as interslot repetition may be used. While FDM schemes have lower latency, for TDM schemes, an UE requires to receive only one beam at a time which may become relevant in frequency range 2 (FR2) with analog beamforming. Antenna ports from the same CDM group are used for the PDSCH transmissions from the two TRPs.

Switching between repetition schemes is done via RRC configuration. Moreover, dynamic switching between single TRP, SDM multiTRP scheme, and the repetition schemes is done by whether a single TCI state or two TCI states, and whether DMRS in a single CDM group or two CDM groups are indicated in a DCI format scheduling a PDSCH.

In release 17, a Single-DCI based multiTRP PDCCH repetition scheme is defined. For PDCCH repetition, two PDCCH candidates are linked with each other via the higher layer parameter *searchSpaceLinking* in the search space set configuration. Furthermore, these two PDCCH candidates are configured in different Search Space sets that are associated with corresponding CORESETs. When the corresponding CORESETs have different TCI states, the two linked PDCCH repetitions carrying the same DCI are transmitted on two different beams.

Notice that once UE receives PDCCH configurations, it may identify the linked PDCCH candidates for repetition. Moreover, depending on the configurations for a given UE, it is possible that only some of the SS sets are linked for repetition while other SS sets contain individual PDCCH candidates without repetition. Then the network may dynamically select the linked PDCCH candidates or individual PDCCH candidates for DCI transmission, and hence dynamically switch between single TRP and multiTRP transmission, depending on the reliability and latency requirements. Note that is not supported in this scheme that the PDCCH candidates originate from CORESETs associated with different CORESET pool index values.

In Release 17 multi-TRP PUCCH repetition scheme, a PUCCH resource containing UL control information (UCI) may be repeated in a TDMed manner using two spatial relation data per PUCCH resource. When configured with higher layer parameter *PUCCH-nrofSlots,* the UE repeats the transmission of the UCI with the given PUCCH resource for the specified number of slots. The PUCCH resource is indicated with multiple spatial relations (FR2) and multiple power control parameters (FR1) via MAC-CE messages. Release 17 may support inter-slot repetition and intra-slot repetition. Switching between single TRP and multiTRP may be done dynamically.

Release 17 enabled TDMed PUSCH repetition toward two TRPs. Both grant-based, mainly single-DCI PUSCH repetition Type A and repetition Type B, and configured grant (CG)- based, both Type 1 and Type 2, PUSCH repetition is supported with two UL beams. For single-DCI based multi-TRP PUSCH repetition, both codebook (CB)-based and non-codebook (NCB)-based PUSCH repetition is supported by indicating two sounding reference signal (SRS) resource indicators (SRIs) and two transmit precoding matrix indicators (TPMIs) (for CB-based PUSCH) in DCI format format 0_1/0_2. The respective SRS resource set is applied for each SRI, which also allows using up to two power control parameter sets.

Dynamic switching between single TRP and non-CB/CB based multiTRP PUSCH repetition was enabled by introducing a new 2 bit DCI field as follow:

| Codepoint | SRS resource set(s) | SRI (for both CB and NCB)/TPMI (CB only) field(s) |
| --- | --- | --- |
| 00 | s-TRP mode with 1st SRS resource set (TRP1) | 1st SRI/TPMI field (2nd field is unused) |
| 01 | s-TRP mode with 2nd SRS resource set (TRP2) | 1st SRITTPMI field (2nd field is unused) |
| 10 | m-TRP mode with (TRP1 ,TRP2 order) 1st SRI/TPMI field: 1st SRS resource set 2nd SRI/TPMI field: 2nd SRS resource set | Both 1st and 2nd SRI/TPMI fields |
| 11 | m-TRP mode with (TRP2,TRP1 order) 1st SRI/TPMI field: 1st SRS resource set 2nd SRI/TPMI field: 2nd SRS resource set | Both 1st and 2nd SRI/TPMI fields |

Spatial- and frequency-domain multiplexing of PUSCH(s) towards multiple TRPs and simultaneous transmission of multiple PUSCHs are not supported.

In Release 17 High Speed Train (HST)-SFN, single DCI based multi-TRP PDCCH and multi-TRP PDSCH SFN schemes were introduced. Here the same copy of a PDCCH or a PDSCH is transmitted from two TRPs on the same time frequency resources. It is assumed that TRP specific SSB/TRS/CSI-RS transmissions are transmitted in a non-SFN manner to facilitate more accurate frequency offset compensation. SFN based multi-TRP PDCCH is enabled by a combination of RRC configuration and activation of a CORESET with two TCI states by MAC-CE. For enhanced SFN based multi-TRP PDSCH, it is enabled by both a RRC configuration and indication of two TCI states in a DCI scheduling the PDSCH. Dynamic switching between SFN based multi-TRP PDSCH and single TRP PDSCH is supported.

In Release 16, MultiDCI multiTRP PDSCH NCJT was introduced to support scenarios with nonideal backhaul between the TRPs, and each TRP schedules a PDSCH using its own DCI. Therefore, for multi-DCI based NC-JT, two PDSCHs can be scheduled simultaneously with two PDCCHs and the two PDSCHs can be fully, partially, or non-overlapping. To handle the HARQ feedback, the CORESET pool concept was introduced. In the RRC configuration, the two TRPs are implicitly represented with two different control resource set (CORESET) groups, each of which is identified by the value of RRC parameter CORESETPoolIndex. The feedback for any received PDSCH that are associated with the same CORESET pool will feed back their HARQ A/N in the same PUCCH. Subsequently, it was decided to also activate TCI states for PDSCH per CORESET pool, so only one TCI state can be indicated in a DCI scheduling a PDSCH.

*Terminology*

In the following, UEs, base stations, and procedures will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.
In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.
Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

**Embodiments**

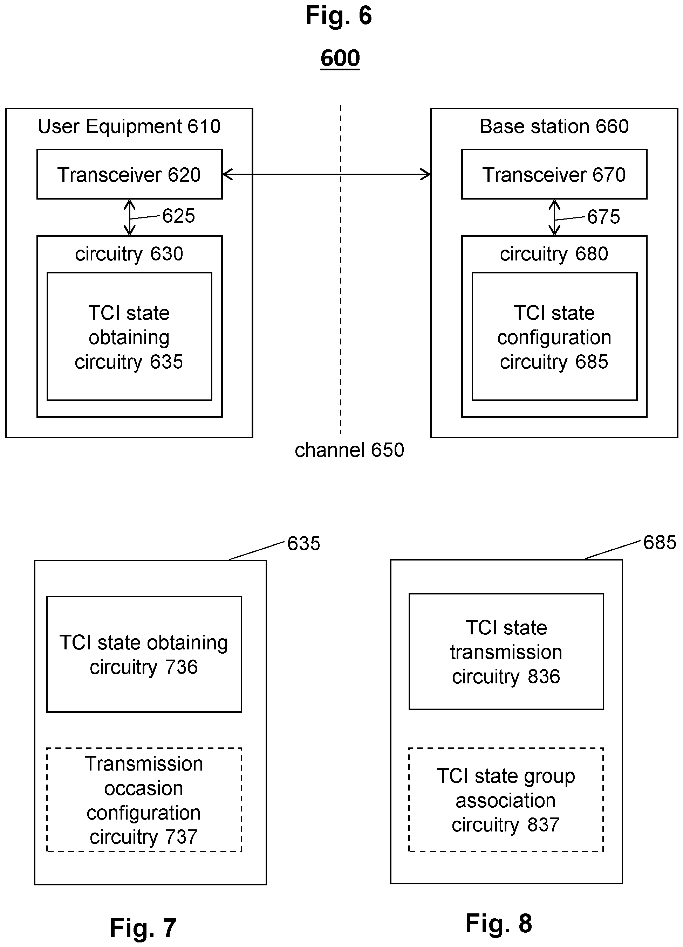

In general, as already indicated above, it may be desirable to extend the Rel-17 unified TCI framework to the multi-TRP scenario.
The present disclosure provides a network node and a user equipment well as a corresponding methods and programs. For instance, an integrated circuit can control a process of a UE or base station. As illustrated in **Fig. 6,** user equipment 610 and network node 660 may communicate with each other over a wireless channel in a wireless communication system. For instance, the user equipment may be a NR user equipment, and the network node may be a base station or scheduling node such as a eNB, or a NR gNB, in particular a gNB in a Non-Terrestrial Network (NTN) NR system. An example of such communication system is illustrated in Fig. 6. The communication system 600 may be a wireless communication system in accordance with the technical specifications of 5G, in particular a NR communication system. However, the present disclosure is not limited to 3GPP NR and may also be applied to other wireless or cellular systems such as NTNs.
Fig. 6 illustrates a general, simplified and exemplary block diagram of a user equipment 610 (also termed communication device) and a network node 660. However, in general, a scheduling device may also be a terminal in case of a sidelink connection between two terminals. Moreover, in particular with respect to the use cases of URLLC; eMBB, and mMTC, the user equipment 610 may also be a sensor device, a wearable device, or a connected vehicle, or a controller of an automated machine in an industrial factory. Further, a user equipment 610 may be able to function as a relay between network node 660 and another communication device (e.g. the disclosure is not limited to communication "terminals" or user "terminals").
The UE and eNB/gNB are communicating with each other over a (wireless) physical channel 650 respectively using their transceivers 620 (UE side) and 670 (network node side). Together, the network node 660 and the terminal 610 form the communication system 600. The communication system 600 may further include other entities such as those shown in Fig. 1.
As shown in **Fig. 6** (left-hand side), according to a first exemplary embodiment, a user equipment (UE) 610 is provided. The UE 610 comprises a transceiver 620 and circuitry 630.
The transceiver 620, in operation, may receive an indication specifying one or more transmission configuration indication (TCI) states. Such an indication may be included for example in a MAC-CE message. Such indication may be a TCI codepoint, or the like. The indication may be received from a base station. However, the present disclosure is not limited thereto and the TCI may be indicated in device to device communication or the like.
The circuitry 630, in operation, receives a MAC-CE message including an indication specifying one or more transmission configuration indication, TCI, states, and obtains a set of TCI states out of a plurality of TCI states, based on the one or more TCI states indicated in the MAC-CE message. In other words, the MAC-CE message activates the TCI states, which are specified by an indication (e.g. a codepoint) in said MAC-CE message.

Each TCI state out of the plurality of TCI states corresponds to a respective spatial domain filter that may be used for uplink and/or downlink and/or sidelink. A base station may configure the UE with said plurality of TCI states in a higher layer, for example using a higher layer indication. Such a higher layer indication, e.g. a RRC message may include said plurality of TCI states.

As mentioned above, wherein a TCI state out of the plurality of TCI states corresponds to one or more of a downlink channel, an uplink channel, and a sidelink channel.

For example, in the sidelink case, the UE receives a repetition of the same transmission data on two or more sidelink channels from two or more UEs. The UE may receive a MAC-CE to activate a list of TCI states corresponding to one or more spatial directions that a UE may use for simultaneous reception from two UEs on the corresponding sidelink channels.

Each of the one or more TCI states indicated in the MAC-CE message is associated with a group of TCI states out of a plurality of groups of TCI states. A group of TCI states out of a plurality of groups of TCI states may indicate one or more spatial directions. In other words, a group of TCI states may include TCI states corresponding to a TRP, a spatial direction, a cluster of TRPs, a set of spatial directions grouped together according to certain criteria like AoA (angle of arrival), or the like.

For example, each group of TCI states may correspond to a TRP. In this case a plurality of groups may correspond to multi TRPs.

For example, a TCI state, which may be indicated by a codepoint in said MAC-CE, is associated with a group of TCI states (e.g. a TRP). Such an association between a codepoint indicating one or more TCI states and a configuration of one or more groups of TCI states may be defined by a standard, may be higher-layer configured, or the like. For example, the UE may receive a configuration indication including said association between a configuration of TCI states, which may be indicated by a codepoint, and a configuration of one or more groups of TCI states out of the plurality of groups of TCI states. Such configuration indication may be included, for example, in a RRC message or any other suitable configuration message. Thus, such association may be higher layer configured.

For example, an indication of such association may be included in a MAC-CE message. For example, there may be a field in the MAC-CE message which indicates a group of TCI states. The MAC-CE message may be the same MAC-CE message as the MAC-CE message including an indication specifying the one or more TCI states or may be a different MAC-CE message.

In general, the circuitry 630 may control the transceiver 620 to receive and/or transmit data. This is illustrated by an arrow 625 which represents schematically an interface between the circuitry 630 and the transceiver 620, over which the control is performed. For example, the circuitry 630 may control 625 the transceiver 620 to receive the indication for the one or more new TCI states.

**Fig. 7** shows an exemplary functional structure of the circuitry 630, in particular, the circuitry 635 handling TCI state obtaining. As shown, the TCI state obtaining circuitry 635 may include a TCI state group obtaining circuitry 736. For example, the TCI state obtaining circuitry 635 may include an additional transmission occasion configuration circuitry 737. More specifically, circuitry 736 may obtain one or more TCI states, which may be indicated in a TCI codepoint, wherein each of said one or more TCI states is associated with a group of TCI states. The transmission occasion configuration 737 may determine when and/or how to (re)configure transmission occasions.

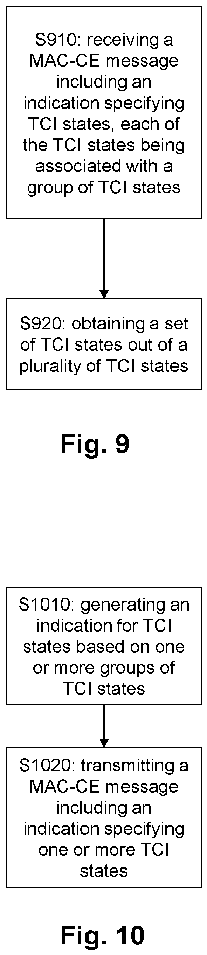

In correspondence with the above described UE, a method for receiving a configuration indication by a user equipment is provided. As shown in **Fig. 9,** the method comprises the steps of:

- receiving S910 a Medium Access Control, MAC, Control Element, CE, message including an indication specifying one or more transmission configuration indication, TCI, states, wherein each of the one or more TCI states is associated with a group of TCI states out of a plurality of groups of TCI states; and
- obtaining S920 a set of TCI states out of a plurality of TCI states, based on the one or more TCI states indicated in the MAC-CE message.

As also shown in Fig. 6 (right-hand side), a base station 660 is provided. The base station 660 comprises a transceiver 670 and a circuitry 680. The circuitry 680, in operation, generates an indication specifying one or more transmission configuration indication, TCI, states, transmits a Medium Access Control, MAC, Control Element, CE, message including said indication, wherein each of the one or more TCI states is associated with a group of TCI states out of a plurality of groups of TCI states.

In general, the circuitry 680 may control the transceiver 670 to receive and/or transmit data. This is illustrated by an arrow 675 which represents schematically an interface between the circuitry 680 and the transceiver 670, over which the control is performed. For example, the circuitry 680 may instruct 675 the transceiver 670 to transmit said indication.

**Fig. 8** shows an exemplary functional structure of the TCI state configuration circuitry 685. In particular, the TCI state configuration circuitry 685 may include a TCI state transmission circuitry 836. For example, the TCI state configuration circuitry 685 may include an additional TCI state group association circuitry 837. Circuitry 836 may be responsible for transmitting a TCI codepoint. Furthermore, circuitry 837 may be responsible for transmitting an indication for an association between a TCI state and a group of TCI states.

Furthermore, in correspondence with the above described base station, a communication method to be performed by a base station is provided. As shown in **Fig. 10,** the method comprising the step of:

- generating S1010 an indication specifying one or more transmission configuration indication, TCI, states, and
- transmitting S1020 a Medium Access Control, MAC, Control Element, CE, message including said indication, wherein each of the one or more TCI states is associated with a group of TCI states out of a plurality of groups of TCI states.

The UE 610 may comprise the transceiver 620 and a (processing) circuitry 630, and the network node 660 may comprise the transceiver 670 and a (processing) circuitry 680. The transceiver 610 in turn may comprise and/or function as a receiver and/or a transmitter. In this disclosure, in other words, the term "transceiver" is used for hardware and software components that allow the communication device 610, or, respectively base station 660 to transmit and/or receive radio signals over a wireless channel 650. Accordingly, a transceiver corresponds to a receiver, a transmitter, or a combination of a receiver and a transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only transmits signals. Moreover, the term "circuitry" includes processing circuitry formed by one or more processors or processing units, etc. The circuitries 630 and 680 (or processing circuitries) may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data.

The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data that is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

It is further noted that any of the steps/operations/methods described below may be performed or controlled by the circuitry 630 (on the UE side) and/or the circuitry 680 (on the network node side).

In the further description, the details and embodiments apply to each of the user equipment, the network node and the methods unless explicit statement or context indicates otherwise. Moreover, it is noted that any of the steps described below may be included as code instructions in a program, which may be executed by one or more processors (e.g. the circuitry 630 and/or the circuitry 680).

In a first exemplary implementation, the MAC-CE message include one or more indications, each indication indicates one or more TCI states. Such an indication may be a TCI codepoint. For, example, the MAC-CE message includes one or more TCI codepoints. Such a TCI codepoint is explained in detail in section *Transmission Configuration Indication (TCI) states.* A TCI codepoint may indicate one or more TCI states. Each of said one or more TCI state belongs to a respective group of TCI states, e.g. a TRP.

For example, the MAC-CE according to the first exemplary implementation includes for each indication an M-bit field, which indicates the number of the one or more TCI states indicated by the respective indication. Moreover, the MAC-CE according to the first exemplary implementation includes for each of the one or more TCI states indicated by the respective indication, a Q-bit field indicating the respective TCI state. M and Q being positive integers. In other words, the MAC-CE message includes an M-bit field per TCI codepoint.

For an indication out of the one or more indications, at least the M-bit field indicates a configuration of one or more groups of TCI states out of a plurality of groups of TCI states. In other words, the bits of the M-bit field may indicate a configuration of downlink and/or uplink TCI states for one or more groups of TCI states (TRPs) for the TCI states indicated by the codepoint.

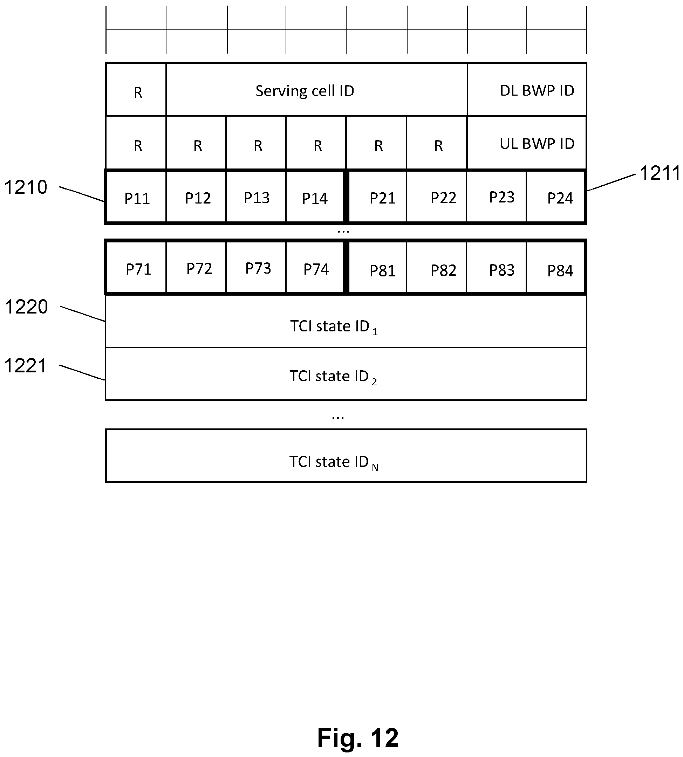

An example for the first exemplary implementation is shown in Figs. 12 to 15. **Fig. 12** depicts an exemplary MAC-CE message. The exemplary MAC-CE includes an M-bit field [Pi1, Pi2, ...., PiM] per codepoint where i stands for the i-th codepoint. The example in Fig. 12 is shown for M=4. The first codepoint 1210 is given by the bits P11, P12, P13 and P14. Fig. 12 exemplarily discloses eight codepoints, wherein the i-th codepoint is given by the bits Pi1, Pi2, Pi3 and Pi4. The M-bit field may be used to identify the number of TCI states per codepoint.

Each codepoint i may refer to $L_i$ TCI states. A list of N Q-bit fields specifies the N TCI states used in the codepoints.

The codepoint to which a TCI state is mapped is determined by its ordinal position among all the TCI state ID fields. The TCI state ID field indicates the TCI state identified by TCI-StateId as for example specified in TS 38.331.

The first Q-bit field in the list corresponds to the first TCI state in the first codepoint. If the size of the first codepoint is $L_1$ TCI states, then the first $L_1$ Q-bit fields in this list correspond to the first codepoint. After that, the TCI states corresponding to second codepoint follow in the list, and so on. For example, the first codepoint 1610 indicates two TCI states. In this exemplary case the Q-bit fields TCI state $ID_1$ 1220 and TCI state $ID_2$ 1221 belong to the first codepoint 1210. A third Q-bit field TCI state $ID_3$, which is not shown in Fig. 12, may belong to the second codepoint indicated by the second M-bit field 1211.

An M-bit field further indicates a configuration of one or more groups of TCI states out of a plurality of groups of TCI states. In other words, there is, for example, an association between a value of the M-bit field and a configuration of one or more groups of TCI states. Such an association may be pre-configured.

Such an association may be pre-configured by a standard, a higher-layer configuration, or the like. For example, the UE may receive a configuration indication (e.g. a RRC message) including said association between a configuration of TCI states, which may be indicated by a TCI codepoint in the MAC-CE message, and a configuration of one or more groups of TCI states out of the plurality of groups of TCI states.

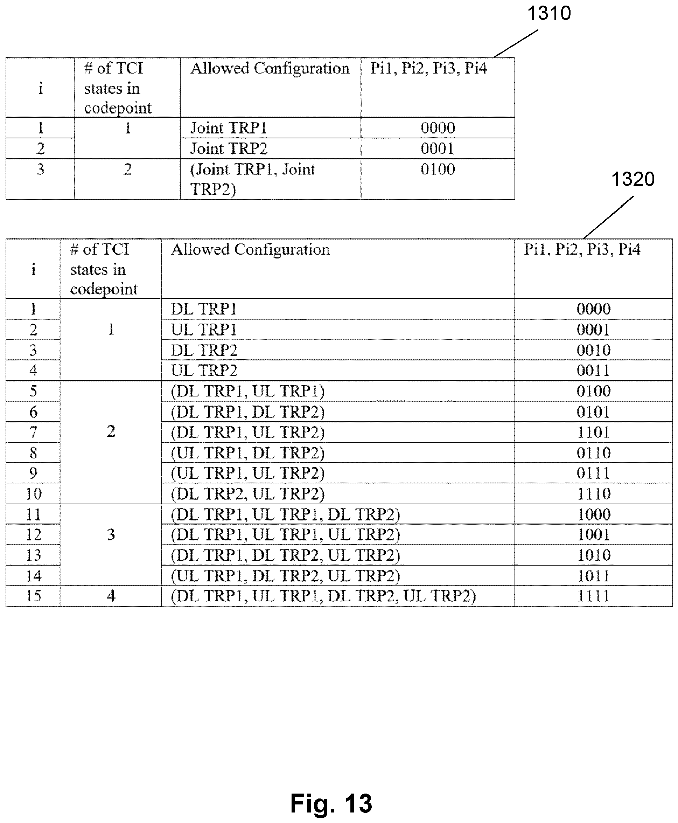

For example, there may be a look-up table (LUT), which indicates an association between a codepoint indicating the one or more TCI states and one or more groups of TCI states. Such LUT may be defined by a standard, a configuration message, or the like. Examples for LUTs are shown in Figs. 13, 14 and 15.

**Fig. 13** depicts a first LUT 1310 for a joint TCI mode indicating an association between codepoints and joint TCI states for two groups of TCI states, e.g. two TRPs. The present invention is not limited to two TRPs or groups. In general any number of TRPs or groups may be used. In general, a LUT may support Z TRPs, wherein Z is a positive integer. For multi-TRP transmissions, Z is greater than one.

Moreover, Fig. 13 depicts a second LUT 1320 for a separate TCI mode indicating an association between codepoints and separate TCI states for two groups of TCI states, e.g. two TRPs. Whether the joint TCI mode or the separate TCI mode is used by an UE and/or a base station may be indicated by a configuration that may be received by the UE or may be set by a standard, or the like. For example, a TCI state mode may be configured per UE, per base station, per cell, or the like.

The first table 1310 as well as the second table 1320 in Fig. 13 provide an association between a value of the M-bit field (M=4 in Fig. 13) [Pi1, Pi2, Pi3, Pi4] and an allowed configuration of groups of TCI states, e.g. TRP1 and TRP2.

For example, in the separate TCI mode, the M-bit field of an exemplary codepoint has the value 0001, which is assigned by the second table 1320 to an uplink state with respect to TRP1. The M-bit field having the value 0001 also indicates that there is one TCI state associated with said codepoint.

For example, in the separate TCI mode, the M-bit field of an exemplary codepoint has the value 1010, which is assigned by the second table 1320 to a downlink with respect to TRP1, a downlink with respect to TRP2 and an uplink with respect to TRP2. The M-bit field having the value 1010 also indicates that there are three TCI state associated with said exemplary codepoint. Thus, the exemplary codepoint having the value 1010 indicates on the one hand which TCI states are activated and on the other hand how said TCI states are associated with TRP1 and TRP2. The TCI states to be activated are indicated in the MAC-CE. The association may be obtained from the exemplary LUT.

For the joint TCI mode of two TRPs, there are three allowed combinations indicated in the first table 1310. In particular, a TCI codepoint may indicate a joint TCI state for TRP1, a joint TCI state for TRP2, or a joint TCI state for TRP1 and a joint TCI state for TRP2.

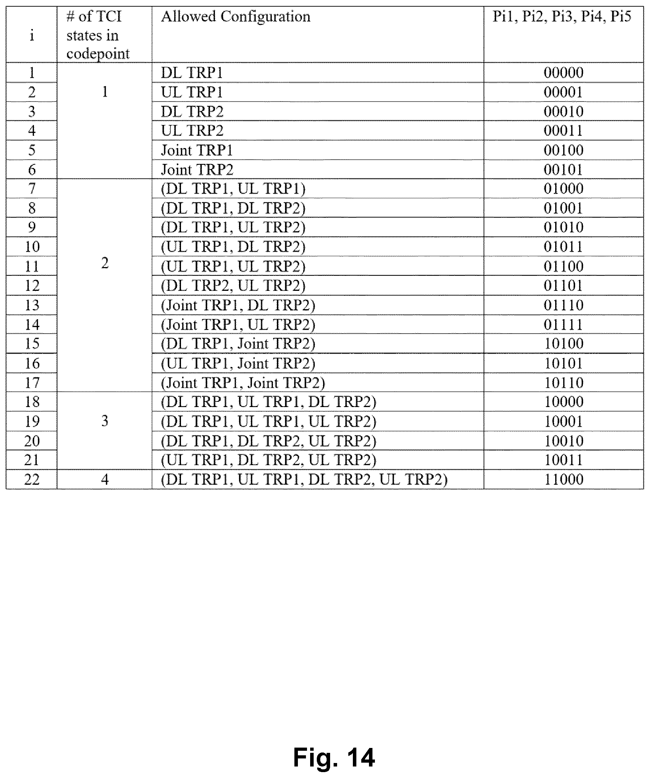

**Fig. 14** exemplarily shows a table for an M-bit field of M=5 bits. In this exemplary implementation, both of the joint TCI mode and the separate TCI mode may be indicated using the same table. For example, the M-bit field of an exemplary codepoint having the value 00010 may indicate a downlink for TRP2, whereas the M-bit field of an exemplary codepoint having the value 00101 may indicate a joint TCI state for TRP2.

The value of M may be for example given by a standard or may be configurable by a higher layer configuration, e.g. in the RRC layer. The value of M may be chosen such that any combination of groups of TCI states per codepoint may be indicated. For example, for two groups of TCI states (two TRPs) four bits may indicate any allowed combination for the separate TCI mode as it is shown in Fig. 13. For example, for two groups of TCI states (two TRPs) five bits may indicate any allowed combination for both the joint TCI mode and the separate TCI mode as it is shown in Fig. 14.

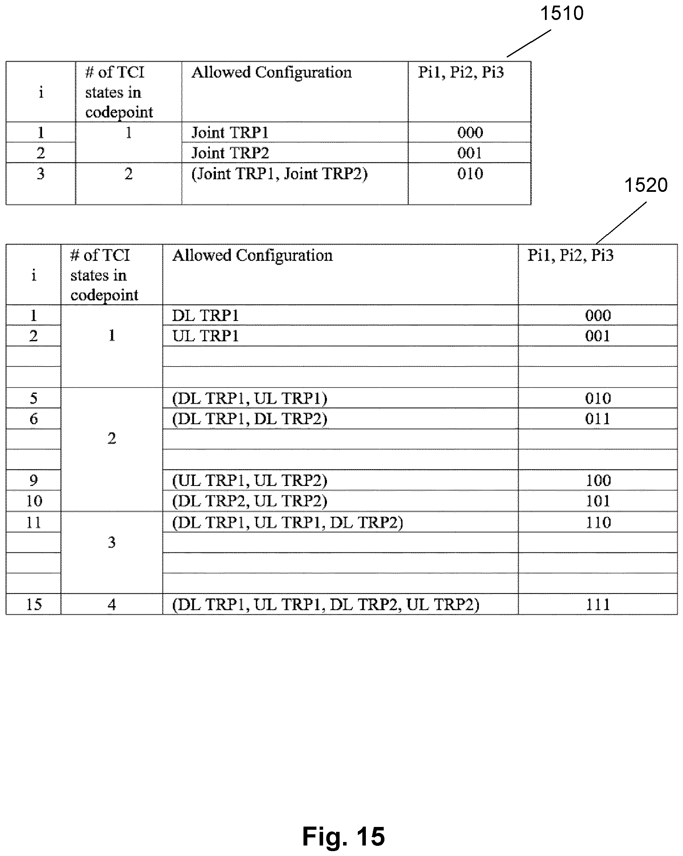

However, M may also be chosen to indicate a subset of all possible combinations of TCI states per codepoint. This is exemplarily shown in **Fig. 15,** where three bits are used to indicate configurations for a joint TCI mode in a first association 1510. Moreover, three bits are used to indicate configurations for a separate TCI mode in a second association 1520. For example, for one TCI state in a codepoint, the second association 1520 allows only for downlink and uplink of TRP1. Such a reduced number of bits may result in a reduced size of the association and/or a reduced size (number of bits) in the MAC-CE, which may be favorable in case not all of the combinations of downlink and uplink for all groups are required.

In the first exemplary implementation, the TCI state may be indicated by the Q bits of the Q-bit field. For example, in the case Q=8, the Q-bit field may indicate 256 different TCI states. For example, Release 17 (cf. 3GPP TS 38.321 V17.2.0 (2022-09), Section 6.1.3.47) supports RRC configured TCI states list including 128 TCI states. Such a Q-bit field with Q=8 facilitates the indication of an increased number of TCI states.

In a second exemplary implementation, the MAC-CE message includes similar fields for each indication (codepoint) as in the first exemplary implementation. For example, the MAC-CE according to the second exemplary implementation includes for each indication an M-bit field, which indicates the number of the one or more TCI states indicated by the respective indication. Moreover, the MAC-CE according to the second exemplary implementation includes for each of the one or more TCI states indicated by the respective indication, a Q-bit field indicating the respective TCI state. M and Q being positive integers. In other words, the MAC-CE message includes an M-bit field per TCI codepoint.

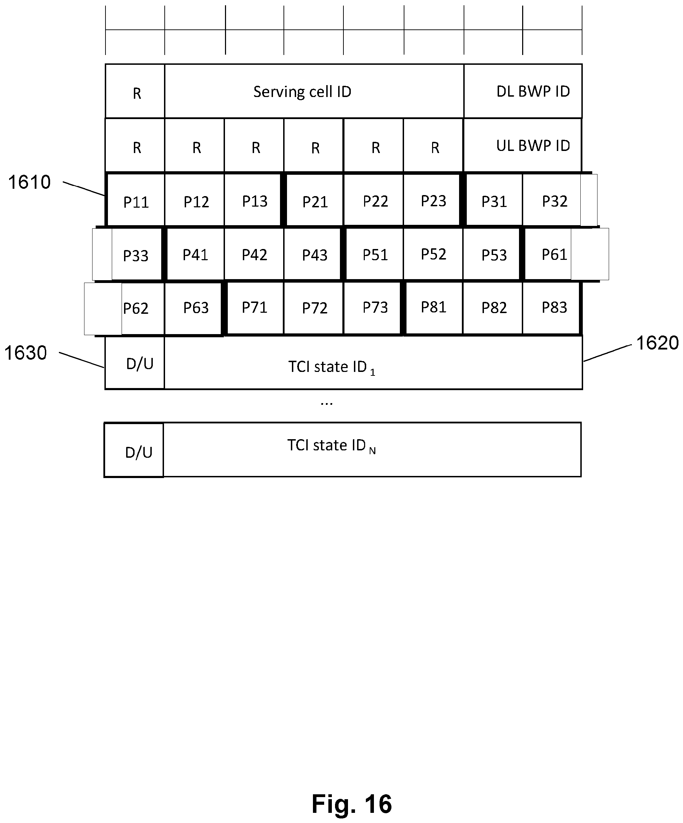

An example for the second exemplary implementation is shown in Figs. 16 to 18. The exemplary MAC-CE message shown in **Fig. 16** includes eight M-bit fields for M=3. The Q-bit field is split into a D/U field 1630 and a TCI state ID field 1620.

In the second exemplary implementation, for each of the Q-bit fields, a part of said Q-bit field indicates whether the TCI state corresponds to a downlink channel and/or an uplink channel. Said part is represented by the D/U field in Fig. 16.

For example, the D/U field indicates whether the TCI state ID in the same octet is for a joint/downlink or uplink TCI state. For example, if this field is set to 0, the TCI state ID in the same octet is for joint/downlink. If this field is set to 1, the TCI state ID in the same octet is for uplink.

For example, Q-1 bits 1620 of the Q-bit field may index the TCI states in a higher layer configured list. The remaining bit 1630 of the Q-bit field may indicate whether TCI state is for uplink or downlink transmission. For Q=8, the (Q-1)-bit TCI state ID may indicate one of up to 128 TCI states in the higher layer configured list. For example in release 17, there are 128 TCI states for joint/DL states and 64 TCI states for UL.

In general, for each Q-bit field a part of said Q-bit field may indicate whether the TCI state corresponds to a downlink channel and/or an uplink channel. In such a case, for each indication, e.g. a codepoint, the respective M-bit field and one or more parts of respective Q-bit fields may indicate a configuration of one or more groups of TCI states out of a plurality of groups of TCI states. For example, the i-th codepoint is indicated by the i-th M-bit field [Pi1, Pi2, ...., PiM] and $L_i$ Q-bit fields, wherein each of the $L_i$ Q-bit fields include a part, which may indicate whether the TCI state corresponds to a downlink channel and/or an uplink channel.

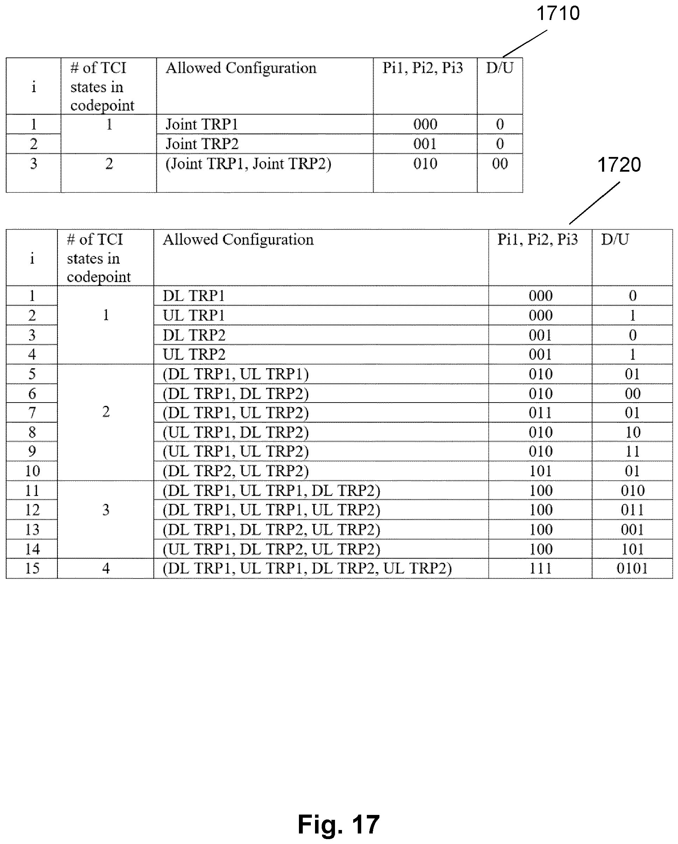

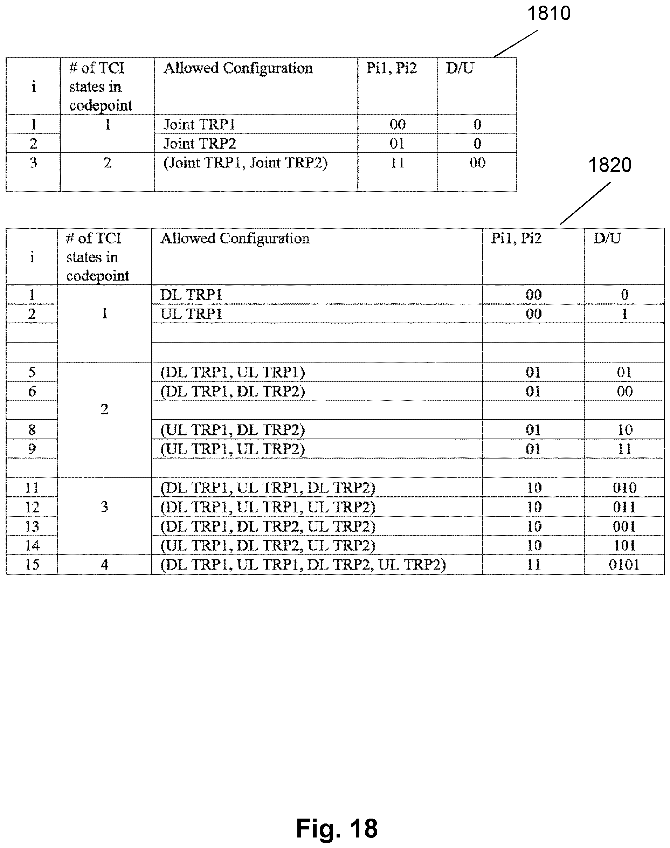

Similarly as in the first exemplary embodiment, there may be a look-up table (LUT), which indicates an association between a codepoint indicating the one or more TCI states and one or more groups of TCI states. Examples for LUTs for the second exemplary embodiment are shown in Figs. 17 and 18.

**Fig. 17** depicts a first LUT 1710 for a joint TCI mode indicating an association between codepoint and joint TCI states for two groups of TCI states, e.g. two TRPs. The present invention is not limited to two TRPs or groups. In general any number of TRPs or groups may be used. In general, a LUT may support Z TRPs, wherein Z is a positive integer. For multi-TRP transmissions, Z is greater than one.

Moreover, Fig. 17 depicts a second LUT 1720 for a separate TCI mode indicating an association between codepoint and joint TCI states for two groups of TCI states, e.g. two TRPs. Whether the joint TCI mode or the separate TCI mode is used by an UE and/or a base station may be indicated by a configuration that may be received by the UE or may be set by a standard, or the like. For example, a TCI state mode may be configured per UE, per base station, per cell, or the like.

The first table 1710 as well as the second table 1720 in Fig. 17 provide an association between a value of the M-bit field, for M=3 this is [Pi1, Pi2, Pi3]. For each TCI state indicated by the codepoint, the values of the respective part of the Q-bit field correspond to said TCI state on one hand and an allowed configuration of groups of TCI states, e.g. TRP1 and TRP2 on the other hand.

In the example in Fig. 16 said part corresponds to the first bit within a Q-bit field, e.g. the first bit D/U 1630. For example, if the first codepoint 1610 refers to one TCI state, the three bits P11, P12 and P13 of the first codepoint and the D/U bit 1630 of the first Q-bit field may indicate an association of the first codepoint and a configuration of groups of TCI-states. According to the second table 1720 for separate TCI mode, such a codepoint may be associated with one of the combinations 1 to 4, depending on the value of said bits. For example, [P11, P12, P13]=000 and D/U=1 indicates an uplink direction for TRP1.

For example, if the first codepoint 1610 refers to two TCI state, the three bits P11, P12 and P13 of the first codepoint, the D/U bit 1630 of the first Q-bit field and the D/U bit of the second Q-bit field may indicate the association of the first codepoint and a configuration of groups of TCI-states. According to the second table 1720 for separate TCI mode, such a codepoint may be associated with one of the combinations 5 to 10, depending on the value of said bits. For example, [P11, P12, P13]=011, the first D/U bit being zero and the second D/U bit being one indicate that the first TCI state specified by TCI State $ID_1$ is a downlink direction for TRP1 and the second TCI state specified by TCI State $ID_2$ is an uplink direction for TRP2.

Similarly as for the first exemplary embodiment, the value of M in the second exemplary embodiment may be given by a standard or may be configurable by a higher layer configuration, e.g. in the RRC layer. The value of M may be chosen such that any combination of groups of TCI states per codepoint may be indicated. For example, for two groups of TCI states (two TRPs) three bits in combination with the respective D/U bits may indicate any allowed combination for the separate TCI mode as it is shown in Fig. 17.

However, M may also be chosen to indicate a subset of all possible combinations of TCI states per codepoint. This is exemplarily shown in **Fig. 18,** where M-bit fields for M=2 are used to indicate configurations for a joint TCI mode in a first association 1810. Moreover, M-bit fields for M=2 are used to indicate configurations for a separate TCI mode in a second association 1820. For example, for one TCI state in a codepoint, the second association 1820 allows only for downlink and uplink of TRP1. Such a reduced number of bits may result in a reduced size of the association and/or a reduced size (number of bits) in the MAC-CE, which may be favorable in case not all of the combinations of downlink and uplink for all groups are required.

In a third exemplary embodiment the received MAC-CE message is a first MAC-CE message including an indication for an association between the TCI states indicated by the first MAC-CE message and a first group of TCI states. Moreover, the UE may receive a second MAC-CE message including an indication for one or more TCI states, the second MAC-CE message including an indication for an association between the TCI states indicated by the second MAC-CE message and a second group of TCI states.

However, the present invention is not limited to a first and a second MAC-CE and the corresponding groups of TCI states. In general, a UE may receive a MAC-CE message for each group of TCI states out of the plurality of groups of TCI states.

For example, the first MAC-CE as well as the second MAC-CE may have a similar structure as a MAC-CE defined for single TRP transmissions in Release 17 (e.g. 3GPP TS 38.221).

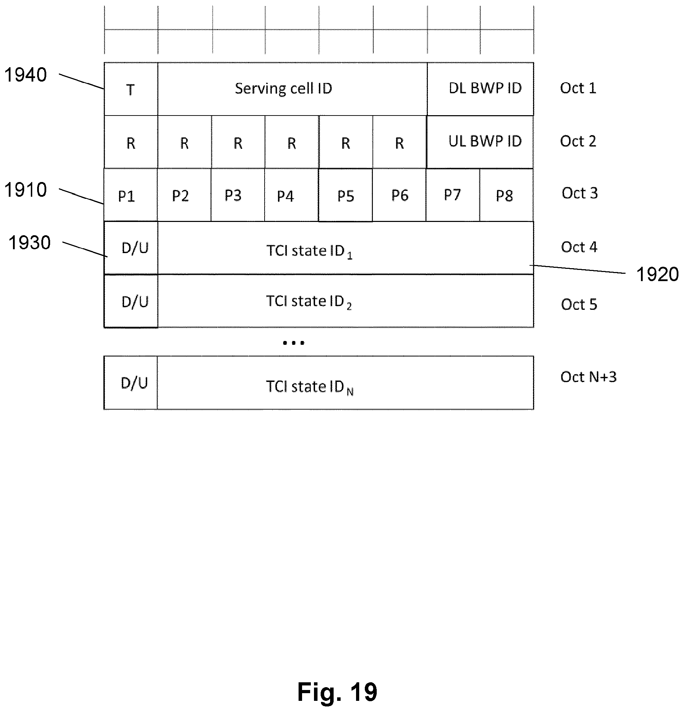

An example for such a first and/or second MAC-CE message is shown in Fig. 19. The Pi field, (e.g. P1 1910) indicates whether each TCI codepoint (e.g. the first codepoint) refers to multiple TCI states or a single TCI state. If Pi field is set to 1, it indicates that i-th TCI codepoint includes the DL TCI state and the UL TCI state. If Pi field is set to 0, it indicates that i-th TCI codepoint includes only the DL/joint TCI state or the UL TCI state. The codepoint to which a TCI state is mapped is determined by its ordinal position among all the TCI state ID fields.

A D/U field 1930 May indicate whether the TCI state ID in the same octet is for joint/downlink or uplink TCI state. For example, if this field is set to 1, the TCI state ID in the same octet is for joint/downlink. If this field is set to 0, the TCI state ID in the same octet is for uplink.

A TCI state ID field 1920 indicates the TCI state identified by TCI-StateId as specified in TS 38.331. For example, if D/U is set to 1, 7-bits length TCI state ID i.e. TCI-StateId as specified in 3GGP TS 38.331 is used. If D/U is set to 0, the most significant bit of TCI state ID may be considered as a reserved bit and remainder 6 bits indicate the UL TCIStateId as specified in TS 38.331. The maximum number of activated TCI states is for example 16.

Such an exemplary MAC-CE may include a plurality of reserved bits, each denoted as R, which may be set to zero.

For example, one or more of said reserved bits may be used for an indication for an association between the TCI states indicated by a MAC-CE message and a respective group of TCI states. For example, for two groups one bit out of the plurality of reserved bits indicates the corresponding group of TCI states. In Fig. 19 such an exemplary bit, e.g. a TRP index, is denoted as T 1940.

In general, S bits may be used to indicate the corresponding group of TCI states, wherein S is a positive integer. Such S bits may indicate up to $2^S$ groups of TCI states. The UE receives for each of those groups of TCI states a respective MAC-CE message.

For example, each of those groups corresponds to a TRP. The UE receives for each TRP a MAC-CE message, which specifies one or more TCI states corresponding to said TRP.

Out of the TCI states indicated by the first MAC-CE message and the TCI states indicated by the second MAC-CE message a subset of TCI states may be obtained. In general a subset of TCI states may be obtained from a plurality of TCI state indicated by one or more of $2^S$ MAC-CE messages.

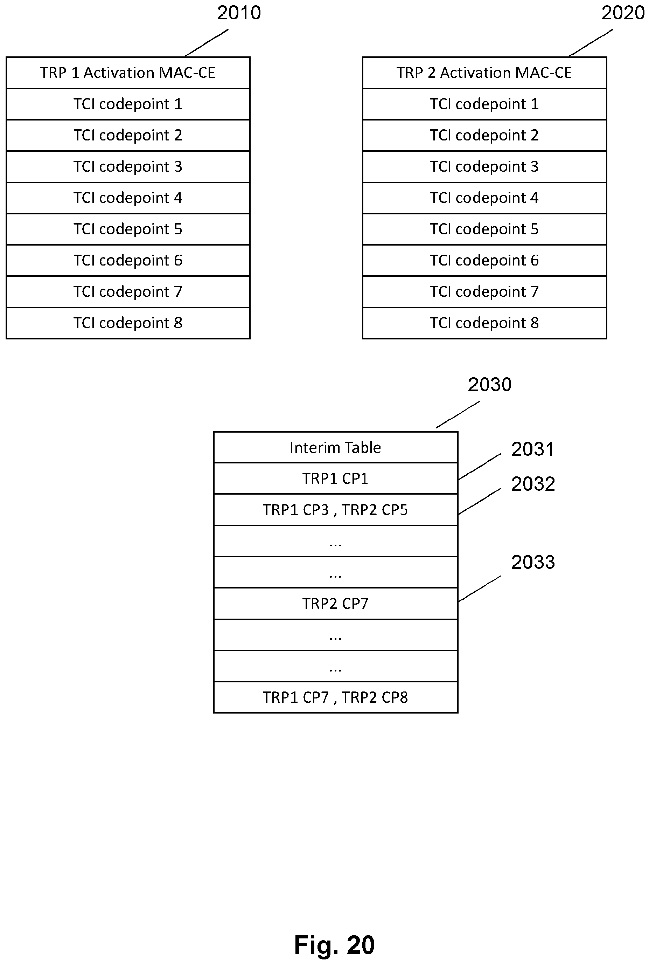

This is shown schematically in **Fig. 20,** which includes a first list 2010 of TCI codepoints for a first TRP (first group of TCI states) obtained from the first MAC-Ce message, each of said TCI codepoints referring to at least one TCI state. A second list 2020, obtained from the second MAC-CE, includes TCI codepoints for a second TRP (second group of TCI states). A third (interim) table 2030 indicates a subset of TCI codepoints, thus referring to a subset of TCI states. Each entry of the interim table 2030 may refer to a configuration for a (multi) TRP transmission. For example, a first configuration 2031 refers to a codepoint CP1 for the first TRP (TRP1), which is specified in the first MAC-CE message. For example, a second configuration 2032 refers to a codepoint CP3 for the first TRP (TRP1), which is specified in the first MAC-CE message, and a codepoint CP5 for the second TRP (TRP2), which is specified in the second MAC-CE message. For example, a third configuration 2033 refers to a codepoint CP7 for the second TRP (TRP2), which is specified in the second MAC-CE message.

In a first example of the third exemplary implementation, the UE may receive a third MAC-CE message (interim MAC-CE message), the third MAC-CE message indicating a subset of TCI states indicated by the first MAC-CE message and/or the second MAC-CE message.

In general, for $2^S$ MAC-CE messages, each of said MAC-CE messages corresponding to a respective group of TCI states (e.g. a TRP), the UE may receive an additional MAC-CE message (interim MAC-CE message).

Such an interim MAC-CE may include a list of S-bit fields [Pi1,..., PiS] that indicate the number of codepoint indices that are included in the i-th entry of the interim table. Moreover, the interim MAC-CE may include a list of K-bit fields corresponding to the codepoint indices in the interim table, K being a positive integer, where S bits from the K-bits may specify to which group of TCI states (TRP) a codepoint index corresponds to and K-S bits may index a codepoint out of the list of codepoints received in the MAC-CE message for the corresponding group of TCI states (TRP).

In other words, the interim MAC-CE includes indications, wherein one or more codepoint indices refer to the codepoints of the $2^S$ groups of TCI states indicated by the $2^S$ MAC-CE messages.

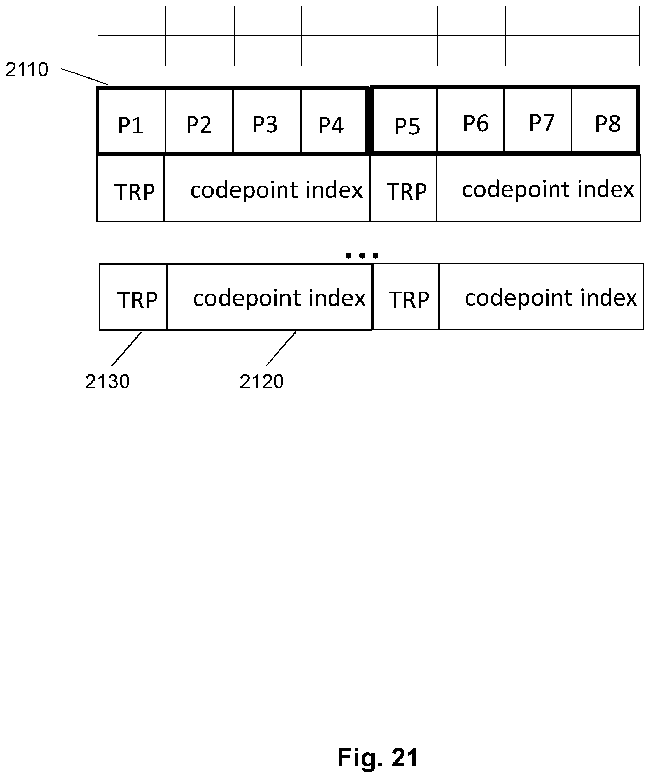

An exemplary structure for a third (interim) MAC-CE is given in **Fig. 21** for S=1. Said exemplary interim MAC-CE message includes indications for eight configurations of TCI states belonging to one or two groups of TCI states (TRPs). Said exemplary interim MAC-CE message includes a list of 1-bit fields 2110 Pi, which indicate a respective number of codepoint indices that are included in the i-th entry of the interim table. Moreover, said exemplary interim MAC-CE message includes a list of K-bit fields, with K=4. Each of those exemplary 4-bit field includes one bit 2130 labelled TRP, which indicates whether the corresponding 3-bit codepoint index 2120 refers to a codepoint indicated by the first MAC-CE message or a codepoint indicated by the second MAC-CE message. The number of entries in the interim table may depend on the size of a field for TCI state indexing in a DCI message used for scheduling. For example, said field may have the size of 2 bits, four entries in the interim table may be indicated. For indexing, for example, up to 16 entries in the interim table, the DCI message may include a 4-bit field.

In a second example of the third exemplary implementation, the UE may receive a DCI message, which indicates one or more TCI states out of the TCI states indicated by the first MAC-CE message and/or the second MAC-CE message. For example, the DCI message includes a DCI field for each group out of the groups of TCI states.

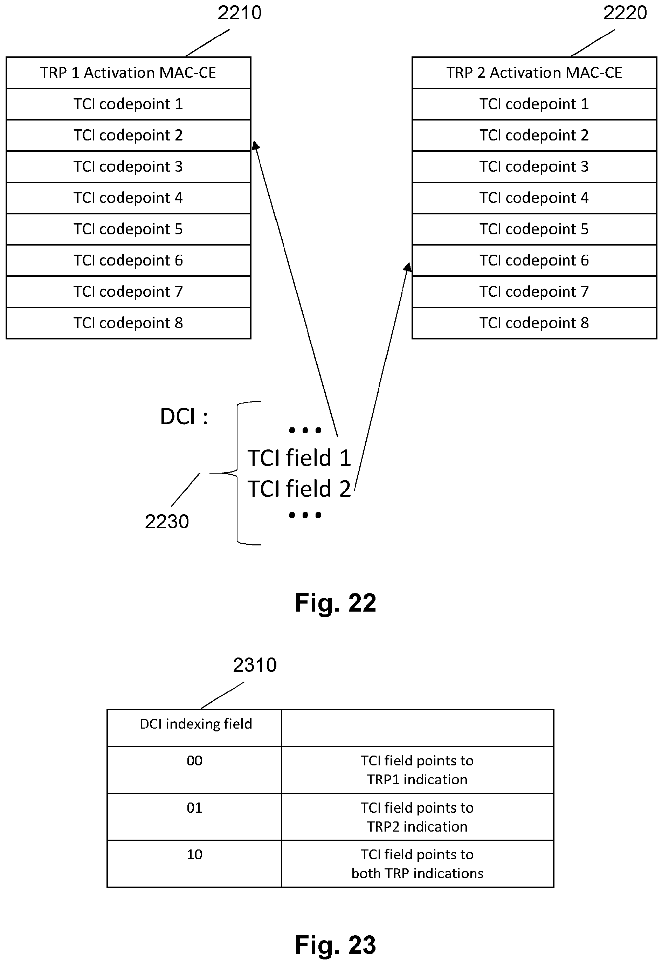

**Fig. 22** exemplarily illustrates a list 2230 of such DCI fields, which refer to the TCI codepoints indicated by the first MAC-CE message 2210 and the TCI codepoints indicated by the second MAC-CE message 2220. For example, a first DCI field "TCI field 1" refers to the second TCI codepoint indicated by the first MAC-CE message, thus a first group of TCI states. A second DCI field "TCI field 2" may refer to the sixth TCI codepoint indicated by the second MAC-CE message, thus a second group of TCI states. In this exemplary illustration, there are two TRPs and thus two DCI fields per indication of a (multi) TRP configuration.

If a configuration of TCI states does not refer to TCI states of a specific group, the DCI field corresponding to said group may have a default configuration. Such default configuration of a DCI field may indicate a blank DCI field. For example, when only a codepoint from one TRP is transmitted, a default configuration may indicate blank DCI fields of other TRPs. By inserting a blank field or a default field, the size of the DCI message is maintained (i.e. independent of the number of groups of the respective configuration of TCI states), which facilitates a correct decoding of the DCI message.

The DCI message according to the second example of the third exemplary implementation facilitates indicating to the UE any combination of TCI-state codepoints from all TRPs.

In a third example of the third exemplary implementation, the UE may receive a DCI message, which indicates one or more TCI states out of the TCI states indicated by the first MAC-CE message and/or the second MAC-CE message.

For an indication of the one or more TCI states out of the TCI states indicated by the first MAC-CE message and/or the second MAC-CE message, the DCI message includes an indexing field indicating one or more groups of TCI states for said indication of the one or more TCI states. In other words, the DCI message includes for each TCI field index an indexing field, which refers to one or more groups of TCI states.

For example, for two TRPs, i.e. two groups of TCI states, the indexing field may be a 2-bit field. A mapping of the values of the 2-bit field is exemplarily provided in **Fig. 23.** The indexing field 2310 may indicate whether a TCI field points to an indication (codepoint) related to the first group of TCI states (TRP1), the second group of TCI states (TRP2) or both the first and the second group of TCI states (TRP1 and TRP2). For example, the indexing field may have the value 00 and thus the corresponding TCI field points to the codepoints indicated by the first MAC-CE message (e.g. an indication for TRP1). For example, the indexing field may have the value 01 and thus the corresponding TCI field points to the codepoints indicated by the second MAC-CE message (e.g. an indication for TRP2). For example, the indexing field may have the value 10 and thus the corresponding TCI field points to the codepoints indicated by both the first MAC-CE message and the second MAC-CE message (e.g. an indication for TRP1 and TRP2).

Such an indexing filed in the DCI message allows for indicating TCI states out of a subset of possible TCI state codepoint configurations

*Updating of TCI states*

The UE may configure one or more transmission occasions for an uplink, downlink or sidelink channel from one or more TRPs based on the obtained TCI states and transmission occasions. For example, the UE may configure two repetitions for the PDSCH channel, each counting as a transmission occasion. For example, the UE may configure one or more transmission occasions for an uplink and/or downlink transmission channel based on the one or more TCI states and an association of each of said one or more TCI states with a respective group of TCI states.

For example, in a case when UE may receive two PDCCHs on two CORESETS (cf. section *Multi TRP transmission schemes*), the UE may be configured to receive the first PDCCH on a CORESET using a first TCI state and the second PDCCH on a CORESET using a second TCI state.

For example, in the case when the UE may transmit PUCCH repetitions in TDM fashion (cf. section *Multi TRP transmission schemes*), the first transmitted repetition follows a TCI state from a first group of TCI states and a second repetition uses a TCI state from a second group of TCI states. Moreover, when the UE is indicated with TCI states from two groups of TCI states, and is operating in single TRP transmission, the UE may be configured for example to use a TCI state belonging to a first group of TCI states and not a second group of TCI states.

One or more current TCI states may be updated based on the obtained set of TCI states out of a plurality of TCI states, the obtained set of TCI states being based on the one or more TCI states indicated in the MAC-CE message. Such set of TCI states may be obtained by any suitable implementation, including the first, second and third exemplary implementation as described in the previous section.

For example, the MAC-CE activates a set of TCI states, which includes receiving said MAC-CE message by the UE and obtaining said set of TCI states out of the plurality of TCI states. Moreover, the UE may receive a DCI message indicating one or more TCI states out of the obtained (activated) set of TCI states. For example, the UE may update the current TCI states based on the one or more TCI states indicated in the DCI message. Such updating includes configuring one or more transmission occasions for an uplink and/or downlink transmission channel.

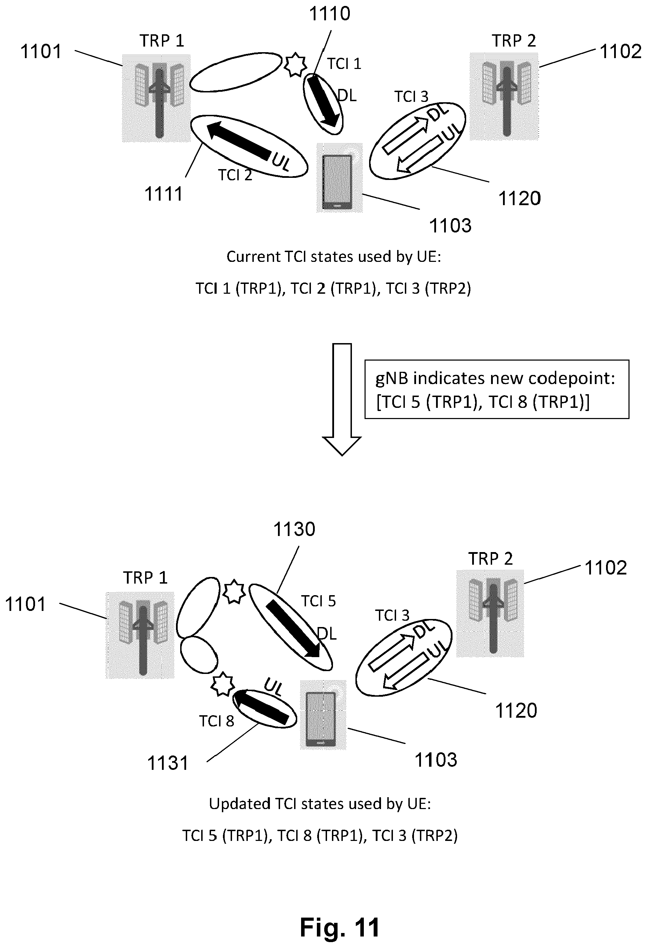

Such an updating is shown exemplarily in **Fig. 11**. An UE 1103 is configured to use TCI state 2 for the UL configuration 1111 to TRP1 1101 and TCI state 1 for the DL 1110 with TRP1 1101. Moreover the UE is configured to use TCI3 as joint UL/DL configuration 1120 with respect to TRP2 1102. TCI states 1 and 2 are associated with a first group (and thus with TRP1 1101), whereas TCI state 3 belongs to a second group (and thus TRP 2 1102). For example, a gNB may indicate a new codepoint: [TCI 5 (TRP1), TCI 8 (TRP1)]. The UE may update the current TCI states associated with TRP1 by the new TCI states. In other words, the UE replaces the states TCI 1 (TRP1), TCI 2 (TRP1) by the states TCI 5 (TRP1) 1130, TCI 8 (TRP1) 1131. The TCI state corresponding to the TRP2 may be kept as there is no update for TRP2 (as indicated in Fig. 11). Alternatively, the TCI state corresponding to the TRP2 may be deleted since the indication did not include information regarding TRP2. The updating of TCI states associated with a group of TCI states (e.g. a TRP), which is not referred to in the updating message may be defined by a standard, by a (higher layer) configuration message, or the like.

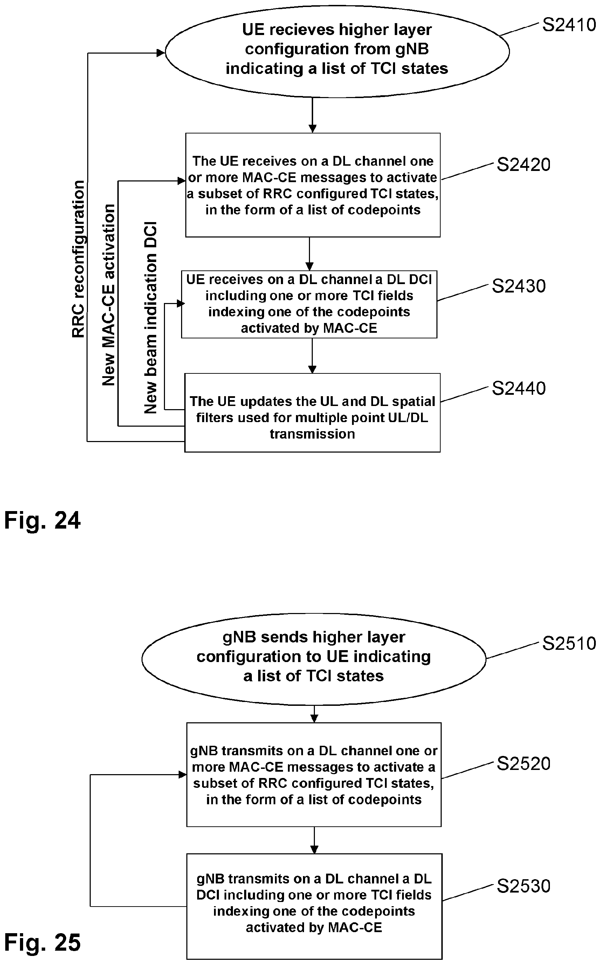

**Fig. 24** is a flowchart depicting exemplary steps performed by an UE. For example, the UE receives S2410 a higher layer configuration (e.g. a RRC configuration) from gNB indicating a set (list) of TCI states. Such set may include, for example 128 TCI states. The UE receives S2420 on a DL channel one or more MAC-CE messages to activate a subset of RRC configured TCI states, in the form of a list of codepoints. Such a TCI codepoint further selects a subset of TCI states from the higher layer configured states (i.e. available TCI states) for UL and DL transmission. The UE obtains (receives) S2430 on a DL channel a DL DCI including one or more TCI fields indexing one of the codepoints activated by MAC-CE. The UE updates S2440 the UL and DL spatial directions (spatial filters) used for multiple point UL/DL transmission based on the TCI states indicated in the received TCI codepoint. Steps S2420 to S2440 may be repeated if the UE receives S2410 a RRC reconfiguration. Steps S2430 to S2440 may be repeated if the UE receives S2420 a new MAC-CE message indicating TCI states for activation. Step S2440 may be repeated if a new TCI codepoint is received S2430 by the UE.

**Fig. 25** is a flowchart depicting exemplary steps performed by a base station (gNB). For example, the base station transmits S2510 a higher layer configuration (e.g. a RRC configuration) to an UE indicating a set (list) of TCI states. The base station transmits S2520 on a DL channel one or more MAC-CE messages to activate a subset of RRC configured TCI states, in the form of a list of codepoints. The base station transmits S2530 on a DL channel a DL DCI including one or more TCI fields indexing one of the codepoints activated by said one or more MAC-CE messages. The DL DCI includes a TCI codepoint further selecting a subset of TCI states from the higher layer configuration for UL and DL transmission. The base station establishes one or multiple TRP connections with the UE using the TCI codepoint information sent on the DL, for UL or DL transmission on the updated spatial directions.

*Hardware and Software Implementation of the present disclosure*

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

*Further Aspects*

According to a first aspect, a user equipment (UE) is provided. The UE comprises a transceiver and a circuitry. The circuitry, in operation: receives a Medium Access Control, MAC, Control Element, CE, message including an indication specifying one or more transmission configuration indication, TCI, states, wherein each of the one or more TCI states is associated with a group of TCI states out of a plurality of groups of TCI states; and obtains a set of TCI states out of a plurality of TCI states, based on the one or more TCI states indicated in the MAC-CE message.

According to a second aspect provided in addition to the first aspect, a group of TCI states out of a plurality of groups of TCI states indicates one or more spatial directions.

According to a third aspect provided in addition to one of the first to second aspects, the MAC-CE message includes one or more indications, each indication indicates one or more TCI states; for each indication, the MAC-CE message includes

- a M-bit field, which indicates the number of the one or more TCI states indicated by the respective indication, and
- for each of the one or more TCI states indicated by the respective indication, a Q-bit field indication the respective TCI state,

M and Q being positive integers, wherein at least the M-bit field further indicates a configuration of one or more groups of TCI states out of a plurality of groups of TCI states.

According to a fourth aspect provided in addition to the third aspect, for each of the Q-bit fields, a part of said Q-bit field indicates whether the TCI state corresponds to a downlink channel and/or an uplink channel, and for each indication the M-bit field and one or more parts of respective Q-bit fields indicate a configuration of one or more groups of TCI states out of a plurality of groups of TCI states.

According to a fifth aspect provided in addition to one of the third or fourth aspects, an association between a value of an M-bit field and a configuration of one or more groups of TCI states is pre-configured.

According to a sixth aspect, provided in addition to one of the first or second aspects, the MAC-CE message is a first MAC-CE message, the first MAC-CE message including an indication for an association between the TCI states indicated by the first MAC-CE message and a first group of TCI states; and the circuitry in operation further receives a second MAC-CE message including an indication for one or more TCI states, the second MAC-CE message including an indication for an association between the TCI states indicated by the second MAC-CE message and a second group of TCI states.

According to a seventh aspect provided in addition to the sixth aspect, the circuitry, in operation, further receives a third MAC-CE message, the third MAC-CE message indicating a subset of TCI states indicated by the first MAC-CE message and/or the second MAC-CE message.

According to an eighth aspect, provided in addition the sixth aspect, the circuitry, in operation, further receives a Downlink Control Information, DCI, message, wherein the DCI message indicates one or more TCI states out of the TCI states indicated by the first MAC-CE message and/or the second MAC-CE message.

According to a ninth aspect provided in addition to the eighth aspect, the DCI message includes a DCI field for each group out of the groups of TCI states.

According to a tenth aspect provided in addition to the eighth aspect, for an indication of the one or more TCI states out of the TCI states indicated by the first MAC-CE message and/or the second MAC-CE message, the DCI message includes an indexing field indicating one or more groups of TCI states for said indication of the one or more TCI states.

According to a eleventh aspect, provided in addition to one of the first to tenth aspects, a TCI state out of the plurality of TCI states corresponds to one or more of a downlink channel, an uplink channel, and a sidelink channel.

According to a twelfth aspect, provided in addition to one of the first to eleventh aspects, the circuitry, in operation, further configures one or more transmission occasions for an uplink and/or downlink transmission channel based on the one or more TCI states and an association of each of said one or more TCI states with a respective group of TCI states.

According to a thirteenth aspect, provided in addition to the eleventh aspect, the circuitry, in operation, further activates the obtained set of TCI states out of the plurality of TCI states; receives a DCI message indicating one or more TCI states out of the obtained set of TCI states, and wherein the configuring of the one or more transmission occasions is based on the one or more TCI states indicated in the DCI message.

According to a fourteenth aspect a method for receiving a configuration indication by a user equipment (UE) is provided. The method comprising the steps of:

- receiving a Medium Access Control, MAC, Control Element, CE, message including an indication specifying one or more transmission configuration indication, TCI, states, wherein each of the one or more TCI states is associated with a group of TCI states out of a plurality of groups of TCI states; and

- obtaining a set of TCI states out of a plurality of TCI states, based on the one or more TCI states indicated in the MAC-CE message.

According to a fifteenth aspect, a base station is provided. The base station comprises a transceiver and a circuitry. The circuitry, in operation: generates an indication specifying one or more transmission configuration indication, TCI, states, and transmits a Medium Access Control, MAC, Control Element, CE, message including said indication, wherein each of the one or more TCI states is associated with a group of TCI states out of a plurality of groups of TCI states.

According to a sixteenth aspect provided in addition to the fifteenth aspect, the circuitry, in operation, further generates a configuration indication indicating a set of TCI states. For example, the transceiver, in operation, further transmits said configuration indication.

According to a seventeenth aspect provided in addition to one of the fifteenth or sixteenth aspects, the circuitry, in operation, generates a DCI message indicating one or more TCI states out of the one or more TCI states specified by the MAC-CE message.

According to a eighteenth aspect provided in addition to one of the fifteenth to seventeenth aspects, the circuitry, in operation, further configures one or more transmission occasions for an uplink or downlink transmission channel with an UE based on the one or more TCI states and an association of each of said one or more TCI states with a respective group of TCI states.

According to a nineteenth aspect a method for transmitting a configuration indication by a base station is provided. The method comprising the steps of:

- generating an indication specifying one or more transmission configuration indication, TCI, states, and
- transmitting a Medium Access Control, MAC, Control Element, CE, message including said indication, wherein each of the one or more TCI states is associated with a group of TCI states out of a plurality of groups of TCI states.

According to a twentieth aspect, an integrated circuit is provided, which, in operation, controls a process of a user equipment, the process comprising the following steps performed by the user equipment:

- receiving a Medium Access Control, MAC, Control Element, CE, message including an indication specifying one or more transmission configuration indication, TCI, states, wherein each of the one or more TCI states is associated with a group of TCI states out of a plurality of groups of TCI states; and
- obtaining a set of TCI states out of a plurality of TCI states, based on the one or more TCI states indicated in the MAC-CE message.

According to a twenty-first aspect, an integrated circuit is provided, which, in operation, controls a process of a base station, the process comprising the following steps performed by the network node:

- generating an indication specifying one or more transmission configuration indication, TCI, states, and
- transmitting a Medium Access Control, MAC, Control Element, CE, message including said indication, wherein each of the one or more TCI states is associated with a group of TCI states out of a plurality of groups of TCI states.

According to a twenty-second aspect, a program stored on a storage medium and including code instructions, which, when executed on one or more processors of a user equipment, cause the one or more processors to execute the following steps:

- receiving a Medium Access Control, MAC, Control Element, CE, message including an indication specifying one or more transmission configuration indication, TCI, states, wherein each of the one or more TCI states is associated with a group of TCI states out of a plurality of groups of TCI states; and
- obtaining a set of TCI states out of a plurality of TCI states, based on the one or more TCI states indicated in the MAC-CE message.

According to a twenty-third aspect, a program stored on a storage medium and including code instructions, which, when executed on one or more processors of a base station, cause the one or more processors to execute the following steps:

- generating an indication specifying one or more transmission configuration indication, TCI, states, and
- transmitting a Medium Access Control, MAC, Control Element, CE, message including said indication, wherein each of the one or more TCI states is associated with a group of TCI states out of a plurality of groups of TCI states.

Summarizing, the disclosure relates to a user equipment, a base station device, and respective methods for a user equipment and a base station. More specifically, the user equipment comprises a transceiver and circuitry which, in operation: receives a Medium Access Control, MAC, Control Element, CE, message including an indication specifying one or more transmission configuration indication, TCI, states, wherein each of the one or more TCI states is associated with a group of TCI states out of a plurality of groups of TCI states; and obtains a set of TCI states out of a plurality of TCI states, based on the one or more TCI states indicated in the MAC-CE message.

**Claims**

1.  A user equipment, UE, comprising:

    a transceiver; and
    circuitry which, in operation:

        receives a Medium Access Control, MAC, Control Element, CE, message including an indication specifying one or more transmission configuration indication, TCI, states,
        wherein each of the one or more TCI states is associated with a group of TCI states out of a plurality of groups of TCI states; and
        obtains a set of TCI states out of a plurality of TCI states, based on the one or more TCI states indicated in the MAC-CE message.

2.  The UE according to claim 1, wherein a group of TCI states out of a plurality of groups of TCI states indicates one or more spatial directions.

3.  The UE according to any of the claims 1 to 2, wherein

    the MAC-CE message includes one or more indications, each indication indicates one or more TCI states;
    for each indication, the MAC-CE message includes

        - a M-bit field, which indicates the number of the one or more TCI states indicated by the respective indication, and
        - for each of the one or more TCI states indicated by the respective indication, a Q-bit field indication the respective TCI state,

            M and Q being positive integers,
            wherein at least the M-bit field further indicates a configuration of one or more groups of TCI states out of a plurality of groups of TCI states.

4.  The UE according to claim 3,

    wherein for each of the Q-bit fields, a part of said Q-bit field indicates whether the TCI state corresponds to a downlink channel and/or an uplink channel, and
    for each indication the M-bit field and one or more parts of respective Q-bit fields indicate a configuration of one or more groups of TCI states out of a plurality of groups of TCI states.

5.  The UE according to any of the claims 3 to 4, wherein an association between a value of an M-bit field and a configuration of one or more groups of TCI states is pre-configured.

6.  The UE according to any of the claims 1 to 2,

    wherein the MAC-CE message is a first MAC-CE message, the first MAC-CE message including an indication for an association between the TCI states indicated by the first MAC-CE message and a first group of TCI states; and
    the circuitry, in operation, further
    receives a second MAC-CE message including an indication for one or more TCI states, the second MAC-CE message including an indication for an association between the TCI states indicated by the second MAC-CE message and a second group of TCI states.

7. The UE according to claim 6, wherein
the circuitry, in operation, further receives a third MAC-CE message, the third MAC-CE message indicating a subset of TCI states indicated by the first MAC-CE message and/or the second MAC-CE message.

8. The UE according to claim 6, wherein

the circuitry, in operation, further receives a Downlink Control Information, DCI, message,
wherein the DCI message indicates one or more TCI states out of the TCI states indicated by the first MAC-CE message and/or the second MAC-CE message.

9. The UE according to claim 8, wherein
the DCI message includes a DCI field for each group out of the groups of TCI states.

10. The UE according to claim 8, wherein
for an indication of the one or more TCI states out of the TCI states indicated by the first MAC-CE message and/or the second MAC-CE message, the DCI message includes an indexing field indicating one or more groups of TCI states for said indication of the one or more TCI states.

11. The UE according to any of the claims 1 to 10, wherein a TCI state out of the plurality of TCI states corresponds to one or more of

   - a downlink channel,
   - an uplink channel, and
   - a sidelink channel.

12. The UE according to any of the claims 1 to 11, wherein the circuitry, in operation, further
configures one or more transmission occasions for an uplink and/or downlink transmission channel based on the one or more TCI states and an association of each of said one or more TCI states with a respective group of TCI states.

13. A method for receiving a configuration indication by a user equipment, UE, the method comprising:

   receiving a Medium Access Control, MAC, Control Element, CE, message including an indication specifying one or more transmission configuration indication, TCI, states, wherein each of the one or more TCI states is associated with a group of TCI states out of a plurality of groups of TCI states; and
   obtaining a set of TCI states out of a plurality of TCI states, based on the one or more TCI states indicated in the MAC-CE message.

14. A base station comprising:

   a transceiver; and
   circuitry which, in operation:

      generates an indication specifying one or more transmission configuration indication, TCI, states, and transmits a Medium Access Control, MAC, Control Element, CE, message including said indication,
      wherein each of the one or more TCI states is associated with a group of TCI states out of a plurality of groups of TCI states.

15. A method for transmitting a configuration indication by a base station, the method comprising:

   generating an indication specifying one or more transmission configuration indication, TCI, states, and transmitting a Medium Access Control, MAC, Control Element, CE, message including said indication,
   wherein each of the one or more TCI states is associated with a group of TCI states out of a plurality of groups of TCI states.

Fig. 1

Fig. 2

Fig. 3

**Enhanced Mobile Broadband**

Gigabytes in a second

3D vide, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

## Fig. 4

NSSF  NEF  NRF  PCF  UDM  AF

Nnssf  Nnef  Nnrf  Npcf  Nudm  Naf

Nausf  Namf  Nsmf

AUSF  AMF  SMF

N1  N2  N4

UE  (R)AN ──N3── UPF ──N6── DN

N9

## Fig. 5

**Fig. 6**

**600**

User Equipment 610

Transceiver 620 ←—————→ 625

circuitry 630

TCI state
obtaining
circuitry 635

channel 650

Base station 660

Transceiver 670 ←—————→ 675

circuitry 680

TCI state
configuration
circuitry 685

635

TCI state obtaining
circuitry 736

Transmission
occasion
configuration
circuitry 737

685

TCI state
transmission
circuitry 836

TCI state group
association
circuitry 837

**Fig. 7**

**Fig. 8**

S910: receiving a MAC-CE message including an indication specifying TCI states, each of the TCI states being associated with a group of TCI states

S920: obtaining a set of TCI states out of a plurality of TCI states

## Fig. 9

S1010: generating an indication for TCI states based on one or more groups of TCI states

S1020: transmitting a MAC-CE message including an indication specifying one or more TCI states

## Fig. 10

Current TCI states used by UE:

TCI 1 (TRP1), TCI 2 (TRP1), TCI 3 (TRP2)

gNB indicates new codepoint:
[TCI 5 (TRP1), TCI 8 (TRP1)]

Updated TCI states used by UE:

TCI 5 (TRP1), TCI 8 (TRP1), TCI 3 (TRP2)

**Fig. 11**

| R | Serving cell ID | | | | | | DL BWP ID | |
|---|---|---|---|---|---|---|---|---|
| R | R | R | R | R | R | UL BWP ID | | |
| P11 | P12 | P13 | P14 | P21 | P22 | P23 | P24 |

...

| P71 | P72 | P73 | P74 | P81 | P82 | P83 | P84 |

| TCI state $ID_1$ |
| TCI state $ID_2$ |

...

| TCI state $ID_N$ |

1210

1211

1220

1221

**Fig. 12**

1310

| i | # of TCI states in codepoint | Allowed Configuration | Pi1, Pi2, Pi3, Pi4 |
|---|---|---|---|
| 1 | 1 | Joint TRP1 | 0000 |
| 2 |  | Joint TRP2 | 0001 |
| 3 | 2 | (Joint TRP1, Joint TRP2) | 0100 |

1320

| i | # of TCI states in codepoint | Allowed Configuration | Pi1, Pi2, Pi3, Pi4 |
|---|---|---|---|
| 1 |  | DL TRP1 | 0000 |
| 2 | 1 | UL TRP1 | 0001 |
| 3 |  | DL TRP2 | 0010 |
| 4 |  | UL TRP2 | 0011 |
| 5 |  | (DL TRP1, UL TRP1) | 0100 |
| 6 |  | (DL TRP1, DL TRP2) | 0101 |
| 7 | 2 | (DL TRP1, UL TRP2) | 1101 |
| 8 |  | (UL TRP1, DL TRP2) | 0110 |
| 9 |  | (UL TRP1, UL TRP2) | 0111 |
| 10 |  | (DL TRP2, UL TRP2) | 1110 |
| 11 |  | (DL TRP1, UL TRP1, DL TRP2) | 1000 |
| 12 | 3 | (DL TRP1, UL TRP1, UL TRP2) | 1001 |
| 13 |  | (DL TRP1, DL TRP2, UL TRP2) | 1010 |
| 14 |  | (UL TRP1, DL TRP2, UL TRP2) | 1011 |
| 15 | 4 | (DL TRP1, UL TRP1, DL TRP2, UL TRP2) | 1111 |

# Fig. 13

| i | # of TCI states in codepoint | Allowed Configuration | Pi1, Pi2, Pi3, Pi4, Pi5 |
|---|---|---|---|
| 1 | | DL TRP1 | 00000 |
| 2 | 1 | UL TRP1 | 00001 |
| 3 | | DL TRP2 | 00010 |
| 4 | | UL TRP2 | 00011 |
| 5 | | Joint TRP1 | 00100 |
| 6 | | Joint TRP2 | 00101 |
| 7 | | (DL TRP1, UL TRP1) | 01000 |
| 8 | | (DL TRP1, DL TRP2) | 01001 |
| 9 | | (DL TRP1, UL TRP2) | 01010 |
| 10 | | (UL TRP1, DL TRP2) | 01011 |
| 11 | 2 | (UL TRP1, UL TRP2) | 01100 |
| 12 | | (DL TRP2, UL TRP2) | 01101 |
| 13 | | (Joint TRP1, DL TRP2) | 01110 |
| 14 | | (Joint TRP1, UL TRP2) | 01111 |
| 15 | | (DL TRP1, Joint TRP2) | 10100 |
| 16 | | (UL TRP1, Joint TRP2) | 10101 |
| 17 | | (Joint TRP1, Joint TRP2) | 10110 |
| 18 | | (DL TRP1, UL TRP1, DL TRP2) | 10000 |
| 19 | 3 | (DL TRP1, UL TRP1, UL TRP2) | 10001 |
| 20 | | (DL TRP1, DL TRP2, UL TRP2) | 10010 |
| 21 | | (UL TRP1, DL TRP2, UL TRP2) | 10011 |
| 22 | 4 | (DL TRP1, UL TRP1, DL TRP2, UL TRP2) | 11000 |

# Fig. 14

1510

| i | # of TCI states in codepoint | Allowed Configuration | Pi1, Pi2, Pi3 |
|---|---|---|---|
| 1 | 1 | Joint TRP1 | 000 |
| 2 | | Joint TRP2 | 001 |
| 3 | 2 | (Joint TRP1, Joint TRP2) | 010 |

1520

| i | # of TCI states in codepoint | Allowed Configuration | Pi1, Pi2, Pi3 |
|---|---|---|---|
| 1 | 1 | DL TRP1 | 000 |
| 2 | | UL TRP1 | 001 |
| | | | |
| | | | |
| 5 | 2 | (DL TRP1, UL TRP1) | 010 |
| 6 | | (DL TRP1, DL TRP2) | 011 |
| | | | |
| 9 | | (UL TRP1, UL TRP2) | 100 |
| 10 | | (DL TRP2, UL TRP2) | 101 |
| 11 | 3 | (DL TRP1, UL TRP1, DL TRP2) | 110 |
| | | | |
| | | | |
| 15 | 4 | (DL TRP1, UL TRP1, DL TRP2, UL TRP2) | 111 |

# Fig. 15

| R | Serving cell ID | | | | | DL BWP ID | |
|---|---|---|---|---|---|---|---|
| R | R | R | R | R | R | UL BWP ID | |
| P11 | P12 | P13 | P21 | P22 | P23 | P31 | P32 |
| P33 | P41 | P42 | P43 | P51 | P52 | P53 | P61 |
| P62 | P63 | P71 | P72 | P73 | P81 | P82 | P83 |
| D/U | TCI state ID $_1$ | | | | | | |

...

| D/U | TCI state ID $_N$ |
|---|---|

**Fig. 16**

1710

| i | # of TCI states in codepoint | Allowed Configuration | Pi1, Pi2, Pi3 | D/U |
|---|---|---|---|---|
| 1 | 1 | Joint TRP1 | 000 | 0 |
| 2 | | Joint TRP2 | 001 | 0 |
| 3 | 2 | (Joint TRP1, Joint TRP2) | 010 | 00 |

1720

| i | # of TCI states in codepoint | Allowed Configuration | Pi1, Pi2, Pi3 | D/U |
|---|---|---|---|---|
| 1 | | DL TRP1 | 000 | 0 |
| 2 | 1 | UL TRP1 | 000 | 1 |
| 3 | | DL TRP2 | 001 | 0 |
| 4 | | UL TRP2 | 001 | 1 |
| 5 | | (DL TRP1, UL TRP1) | 010 | 01 |
| 6 | | (DL TRP1, DL TRP2) | 010 | 00 |
| 7 | 2 | (DL TRP1, UL TRP2) | 011 | 01 |
| 8 | | (UL TRP1, DL TRP2) | 010 | 10 |
| 9 | | (UL TRP1, UL TRP2) | 010 | 11 |
| 10 | | (DL TRP2, UL TRP2) | 101 | 01 |
| 11 | | (DL TRP1, UL TRP1, DL TRP2) | 100 | 010 |
| 12 | 3 | (DL TRP1, UL TRP1, UL TRP2) | 100 | 011 |
| 13 | | (DL TRP1, DL TRP2, UL TRP2) | 100 | 001 |
| 14 | | (UL TRP1, DL TRP2, UL TRP2) | 100 | 101 |
| 15 | 4 | (DL TRP1, UL TRP1, DL TRP2, UL TRP2) | 111 | 0101 |

# Fig. 17

1810

| i | # of TCI states in codepoint | Allowed Configuration | Pi1, Pi2 | D/U |
|---|---|---|---|---|
| 1 | 1 | Joint TRP1 | 00 | 0 |
| 2 | | Joint TRP2 | 01 | 0 |
| 3 | 2 | (Joint TRP1, Joint TRP2) | 11 | 00 |

1820

| i | # of TCI states in codepoint | Allowed Configuration | Pi1, Pi2 | D/U |
|---|---|---|---|---|
| 1 | | DL TRP1 | 00 | 0 |
| 2 | 1 | UL TRP1 | 00 | 1 |
| | | | | |
| | | | | |
| 5 | | (DL TRP1, UL TRP1) | 01 | 01 |
| 6 | | (DL TRP1, DL TRP2) | 01 | 00 |
| | 2 | | | |
| 8 | | (UL TRP1, DL TRP2) | 01 | 10 |
| 9 | | (UL TRP1, UL TRP2) | 01 | 11 |
| | | | | |
| 11 | | (DL TRP1, UL TRP1, DL TRP2) | 10 | 010 |
| 12 | 3 | (DL TRP1, UL TRP1, UL TRP2) | 10 | 011 |
| 13 | | (DL TRP1, DL TRP2, UL TRP2) | 10 | 001 |
| 14 | | (UL TRP1, DL TRP2, UL TRP2) | 10 | 101 |
| 15 | 4 | (DL TRP1, UL TRP1, DL TRP2, UL TRP2) | 11 | 0101 |

# Fig. 18

| | | | | | | | | |
|---|---|---|---|---|---|---|---|---|
| T | Serving cell ID | | | | | DL BWP ID | | Oct 1 |
| R | R | R | R | R | R | UL BWP ID | | Oct 2 |
| P1 | P2 | P3 | P4 | P5 | P6 | P7 | P8 | Oct 3 |
| D/U | TCI state ID$_1$ | | | | | | | Oct 4 |
| D/U | TCI state ID$_2$ | | | | | | | Oct 5 |

• • •

| | | |
|---|---|---|
| D/U | TCI state ID$_N$ | Oct N+3 |

1940

1910

1930

1920

# Fig. 19

2010

| TRP 1 Activation MAC-CE |
| --- |
| TCI codepoint 1 |
| TCI codepoint 2 |
| TCI codepoint 3 |
| TCI codepoint 4 |
| TCI codepoint 5 |
| TCI codepoint 6 |
| TCI codepoint 7 |
| TCI codepoint 8 |

2020

| TRP 2 Activation MAC-CE |
| --- |
| TCI codepoint 1 |
| TCI codepoint 2 |
| TCI codepoint 3 |
| TCI codepoint 4 |
| TCI codepoint 5 |
| TCI codepoint 6 |
| TCI codepoint 7 |
| TCI codepoint 8 |

2030

| Interim Table |
| --- |
| TRP1 CP1 |
| TRP1 CP3 , TRP2 CP5 |
| ... |
| ... |
| TRP2 CP7 |
| ... |
| ... |
| TRP1 CP7 , TRP2 CP8 |

2031

2032

2033

## Fig. 20

2110

| P1 | P2 | P3 | P4 | P5 | P6 | P7 | P8 |
|---|---|---|---|---|---|---|---|
| TRP | codepoint index | | | TRP | codepoint index | | |

. . .

| TRP | codepoint index | TRP | codepoint index |
|---|---|---|---|

2130          2120

**Fig. 21**

2210

| TRP 1 Activation MAC-CE |
|---|
| TCI codepoint 1 |
| TCI codepoint 2 |
| TCI codepoint 3 |
| TCI codepoint 4 |
| TCI codepoint 5 |
| TCI codepoint 6 |
| TCI codepoint 7 |
| TCI codepoint 8 |

2220

| TRP 2 Activation MAC-CE |
|---|
| TCI codepoint 1 |
| TCI codepoint 2 |
| TCI codepoint 3 |
| TCI codepoint 4 |
| TCI codepoint 5 |
| TCI codepoint 6 |
| TCI codepoint 7 |
| TCI codepoint 8 |

DCI :

. . .

TCI field 1
TCI field 2

2230

. . .

## Fig. 22

2310

| DCI indexing field | |
|---|---|
| 00 | TCI field points to TRP1 indication |
| 01 | TCI field points to TRP2 indication |
| 10 | TCI field points to both TRP indications |

## Fig. 23

UE recieves higher layer configuration from gNB indicating a list of TCI states ⟋ S2410

The UE receives on a DL channel one or more MAC-CE messages to activate a subset of RRC configured TCI states, in the form of a list of codepoints ⟋ S2420

UE receives on a DL channel a DL DCI including one or more TCI fields indexing one of the codepoints activated by MAC-CE ⟋ S2430

The UE updates the UL and DL spatial filters used for multiple point UL/DL transmission ⟋ S2440

RRC reconfiguration

New MAC-CE activation

New beam indication DCI

# Fig. 24

gNB sends higher layer configuration to UE indicating a list of TCI states ⟋ S2510

gNB transmits on a DL channel one or more MAC-CE messages to activate a subset of RRC configured TCI states, in the form of a list of codepoints ⟋ S2520

gNB transmits on a DL channel a DL DCI including one or more TCI fields indexing one of the codepoints activated by MAC-CE ⟋ S2530

# Fig. 25

Europäisches
Patentamt

European
Patent Office

Office européen
des brevets

# EUROPEAN SEARCH REPORT

Application Number

EP 23 15 6233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 727 405 A (RES INST CHINA MOBILE COMMUNICATIONS CORP ET AL.) 8 July 2022 (2022-07-08) * paragraphs [0021] - [0029], [0140] - [0142]; figures 1, 6 * | 1,3-15 | INV. H04B7/0408 H04L5/00 H04W72/044 H04W72/23 |
| X | US 2022/345197 A1 (FARAG EMAD N [US] ET AL) 27 October 2022 (2022-10-27) * paragraphs [0162], [0235], [0240], [0258] - [0260], [0273] - [0274], [0433]; figure 15 * | 1-15 | |
| X | US 2022/239423 A1 (ZHU DALIN [US] ET AL) 28 July 2022 (2022-07-28) * paragraphs [0398], [0414] - [0418], [0428]; claim 2; figures 15A, 15B; table 14 * | 1-3,6, 8-10, 13-15 | |

TECHNICAL FIELDS
SEARCHED     (IPC)

H04B
H04L
H04W

The present search report has been drawn up for all claims

| Place of search | Date of completion of the search | Examiner |
|---|---|---|
| Munich | 30 June 2023 | Ganis, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 6233

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2023

| Patent document cited in search report | | Publication date | Patent family member(s) | | Publication date |
|---|---|---|---|---|---|
| CN 114727405 | A | 08-07-2022 | NONE | | |
| US 2022345197 | A1 | 27-10-2022 | CN | 115606104 A | 13-01-2023 |
| | | | EP | 4136763 A1 | 22-02-2023 |
| | | | KR | 20230017225 A | 03-02-2023 |
| | | | US | 2021359745 A1 | 18-11-2021 |
| | | | US | 2022345197 A1 | 27-10-2022 |
| | | | WO | 2021230686 A1 | 18-11-2021 |
| US 2022239423 | A1 | 28-07-2022 | US | 2022239423 A1 | 28-07-2022 |
| | | | WO | 2022158945 A2 | 28-07-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAMSUNG.** Revised WID (work item description): Enhancements on MIMO for NR. *3GPP TSG RAN (Technical Specification Group Radio Access Network) Meeting #81, Gold Coast, Australia,* 10 September 2018

- *3GPP TS 38.321 V17.2.0,* September 2022